# EUROPEAN PATENT APPLICATION

(11) **EP 4 693 432 A1**
(43) Date of publication of application: **11.02.2026**
(21) Application number: 24781163.1
(22) Date of filing: 25.03.2024
(51) Int. Cl.: H01M 4/13, H01M 4/66, H01M 10/052, H01M 10/058, H01M 4/62, H01M 4/02

(54) **NEGATIVE ELECTRODE AND LITHIUM BATTERY COMPRISING SAME**

(30) Priority: 26.03.2023 KR 20230039414; 03.07.2023 KR 20230085976
(71) Applicant: SAMSUNG SDI CO., LTD., Yongin-si, Gyeonggi-do 17084 (KR)
(72) Inventor: LEE, Kang Hee, Yongin-Si Gyeonggi-do 17084 (KR); WOO, Hyun Sik, Yongin-Si Gyeonggi-do 17084 (KR); BAE, Woo Jin, Yongin-Si Gyeonggi-do 17084 (KR); MOON, Jong Seok, Yongin-Si Gyeonggi-do 17084 (KR); PARK, Jong Seok, Yongin-Si Gyeonggi-do 17084 (KR); KIM, Hee Min, Yongin-Si Gyeonggi-do 17084 (KR); PARK, Jin Hwan, Yongin-Si Gyeonggi-do 17084 (KR)
(74) Representative: Michalski Hüttermann & Partner Patentanwälte mbB
(86) International application number: PCT/KR2024/003729
(87) International publication number: WO 2024/205172

(57) **Abstract**

Presented is a lithium battery comprising a negative electrode that comprises: a negative electrode current collector, and an electrodeposition-inducing layer which is disposed on the negative electrode current collector and includes a first carbon-based material, wherein the first carbon-based material is amorphous carbon containing a nitrogen element, and the amount of the nitrogen element contained in the first carbon-based material is greater than 1% by weight on the basis of the total weight of the first carbon-based material.

## Description

### Technical Field

Embodiments of the present disclosure described herein are related to an anode and a lithium battery including the same.

### Background Art

Current related art lithium batteries mainly utilize carbonaceous anode active materials such as graphite. The carbonaceous anode active materials do not change in volume during charging and discharging, and thus the stability of lithium batteries is high. The theoretical electric capacity of graphite is relatively small, e.g., as small as 372 mAh/g.

A lithium metal may be utilized as an anode active material. The lithium metal may have a relatively great or large theoretical electric capacity of, e.g., about 3860 mA/g. In the lithium metal, dendrites may form on a surface of the lithium metal during charging and discharging due to a side reaction, and may cause a short-circuit between a cathode and an anode. As a result, a lithium battery including the lithium metal may have a deteriorated lifespan characteristic.

As such, a method of improving lifespan characteristics of the lithium battery containing lithium metals may be desirable or may even be required.

### Disclosure of Invention

### Technical Problem

Aspects according to one or more embodiments are directed toward an anode having a novel structure.

Aspects according to one or more embodiments are directed toward a lithium battery including the anode having the novel structure.

### Solution to Problem

According to one or more embodiments, an anode includes
an anode current collector, and
an electrodeposition inducing layer disposed on the anode current collector and including a first carbonaceous material,
wherein the first carbonaceous material is amorphous carbon containing a nitrogen element, and
an amount of the nitrogen element is more than about 1 wt% with respect to the total weight of the electrodeposition inducing layer.

According to one or more embodiments, a lithium battery includes
a cathode, and the anode, and
an electrolyte disposed between the cathode and the anode.

### Advantageous Effects of Invention

According to embodiments, lithium is uniformly plated by applying an anode having a novel structure, and thus a lithium battery having improved cycle characteristics may be provided.

### Brief Description of Drawings

FIG. 1 shows a cross-sectional view of an anode according to embodiments.
FIG. 2 shows a cross-sectional view of an anode according to embodiments.
FIG. 3 shows a schematic diagram of a lithium metal battery according to embodiments.
FIG. 4 shows a schematic diagram of a lithium metal battery according to embodiments.
FIG. 5 shows a schematic diagram of a lithium metal battery according to embodiments.
FIG. 6 is a cross-sectional view of a lithium metal battery including a solid electrolyte layer, according to other embodiments.
FIG. 7 is a cross-sectional view of a lithium metal battery including a solid electrolyte layer, according to other embodiments.
FIG. 8A shows a scanning electron microscopy (SEM) image of an anode when a lithium electrodeposition inducing layer according to Example 1 begins to be formed on the electrodeposition inducing layer.
FIG. 8B shows an SEM image of an anode after the lithium electrodeposition layer has been formed on the electrodeposition inducing layer according to Example 1.
FIG. 9A shows an SEM image of an anode when a lithium electrodeposition layer begins to be formed on the electrodeposition inducing layer according to Comparative Example 3.
FIG. 9B shows an SEM image of an anode after the lithium electrodeposition layer has been formed on an electrode position inducing layer according to Comparative Example 3.

### Mode for the Invention

In an anodeless lithium metal battery (e.g., a lithium metal battery without an anode active material layer), in which an anode active material layer is excluded, during charging and discharging, a lithium electrodeposition layer containing lithium may be precipitated or dissolved between an anode current collector and an electrolyte layer. As charging and discharging of the anodeless lithium metal battery is repeated, a lithium electrodeposition layer may include impurities remained within the electrode and decomposition products of the electrolyte. Therefore, a surface of the lithium electrodeposition layer may be rough and hard because the impurities are contained. A lithium dendrite may be precipitated on the lithium electrodeposition layer having the rough surface. The lithium dendrite may continuously grow during the charging and discharging to thereby cause a shortcut between the cathode and the anode.

The anode according to embodiments may have a novel structure, and thus lithium may be uniformly precipitated, and lithium dendrite formation may be inhibited in or at the anode, short-circuit occurrence may be suppressed or reduced in the lithium battery applying the anode, resulting in improvement in cycle characteristics.

The present disclosure described hereinafter may be modified in one or more suitable ways, and may have many embodiments, and thus, particular embodiments are illustrated in the drawings, and are described in more detail. The present disclosure, however, should not be construed as limited to the particular embodiments set forth herein, and rather, should be understood as covering all modifications, equivalents, or alternatives falling within the scope of the present disclosure.

The terms utilized herein is for the purpose of describing particular embodiments only, and is not intended to be limiting the present disclosure. An expression utilized in the singular encompasses the expression of the plural, unless it has a clearly different meaning in the context. It will be further understood that the terms "comprises", "includes", and/or the like if (e.g., when) utilized in this specification, specify the presence of stated features, integers, steps, operations, elements, components, materials or a combination thereof but do not preclude the presence or addition of one or more other features, integers, steps, operations, elements, components, materials or a combination thereof. The sign "/" utilized herein may be interpreted as "and," or as "or" depending on the context

In the drawings, thicknesses may be magnified or reduced to clearly illustrate one or more suitable layers and regions. Like reference numerals and symbols may refer to like elements throughout, and duplicative descriptions thereof may not be provided the specification. It will be understood that if (e.g., when) a part such as a layer, film, region, plate, and/or the like is referred to as being "on", or "above" another element, it can be directly on the other element, or intervening elements may be present therebetween. Although the terms "first," "second," etc. may be utilized herein to describe one or more suitable elements, these elements should not be limited by these terms. These terms are only utilized to distinguish one element from another element. Components having substantially the same functional configuration in the present specification and drawings refer to the same reference numerals and symbols, and redundant description will not be provided.

As utilized herein, the term a "particle diameter" of a particle refers to an average particle diameter if (e.g., when) the particle is spherical, and for a particle that is non-spherical, said term refers to an average major axis length of the particle. The particle diameter of the particles may be measured utilizing a particle size analyzer (PSA). The "particle diameter" of a particle may be, for example, the average particle diameter. The average particle diameter may be, for example, a median particle diameter (D50). The median particle diameter (D50) is the size of the particle corresponding to 50% cumulative volume, calculated from the side of the particle with the smaller particle size in the size distribution of the particle as measured, for example, by laser diffraction.

The term "metal" utilized herein includes both (e.g., simultaneously) metals and metalloids such as silicon and germanium in an elemental or ionic state.

The term "alloy" utilized herein refers to a mixture of two or more metals.

The term "cathode active material" utilized herein refers to a cathode material capable of undergoing lithiation and delithiation.

The term "anode active material" utilized herein refers to an anode material capable of undergoing lithiation and delithiation.

The terms "lithiation" and "lithiate" utilized herein refer to a process of adding lithium to a cathode active material or an anode active material.

The terms "delithiation" and "delithiate" utilized herein refer to a process of removing lithium from a cathode active material or an anode active material.

The terms "charging" and "charge" utilized herein refer to a process of providing electrochemical energy to a battery.

The term "discharging" and "discharge" utilized herein refer to a process of removing electrochemical energy from a battery.

The term "cathode" utilized herein refer to an electrode in which electrochemical reduction and lithiation occur during a discharging process.

The term "anode" utilized herein refer to an electrode in which electrochemical oxidation and delithiation occurs during the discharge process.

Hereinafter, an anode according to embodiments and a lithium battery including the same will be described in more detail.

### [Anode]

The anode according to embodiments may include an anode current collector and an electrodeposition inducing layer disposed on the anode current collector and containing a first carbonaceous material, the first carbonaceous material may be amorphous carbon containing a nitrogen element, and an amount of the nitrogen element may be more than about 1 wt% with respect to the total weight (of 100 wt%) of the electrodeposition inducing layer. In this case, the amount of the nitrogen element may be more than or equal to about 10 wt% with respect to the total weight of the first carbonaceous material. For example, in the electrodeposition inducing layer containing the first carbonaceous material containing the nitrogen element, a lithium ion may be uniformly precipitated on the electrodeposition inducing layer. For example, in the electrodeposition inducing layer containing the first carbonaceous material containing the nitrogen element, a lithium ion may bind preferentially to the nitrogen element, and thus the lithium ion may be precipitated on the surface of the first carbonaceous material. As a result, the lithium ion may be uniformly precipitated on the electrodeposition inducing layer. Because the lithium ion is uniformly precipitated on the electrodeposition inducing layer, density of the lithium electrodeposition layer formed on the electrodeposition inducing layer is improved, and thus the lithium battery including the anode may have improved energy density. In the first carbonaceous material containing the nitrogen element, lithium ions may be uniformly precipitated on the surface of the electrodeposition inducing layer, and thus generation and/or growth of the lithium dendrite may be effectively prevented or reduced. The anode including an electrodeposition inducing layer containing the first carbonaceous material that contains the nitrogen element, and the lithium battery applying the same have improved stability, and improved cycle characteristics.

In some embodiments, in the electrodeposition inducing layer including the first carbonaceous material containing no nitrogen elements or containing nitrogen element in an amount of about 10 wt% or less with respect to the total weight of the first carbonaceous material, the amount of nitrogen elements included in the electrodeposition inducing layer is about 1 wt% or less, and thus lithium ions may be not uniformly precipitated. Therefore, the lithium electrodeposition layer formed on the electrodeposition inducing layer may have decreased density, and thus the anode including the electrodeposition inducing layer containing the first carbonaceous material containing the nitrogen element, and the lithium battery applying the same may have decreased energy density. In some embodiments, in the electrodeposition inducing layer containing no nitrogen element, or containing a small amount of nitrogen element, lithium ions are not uniformly precipitated on the electrodeposition inducing layer in the electrodeposition inducing layer including the first carbonaceous material, and thus generation and/or growth of the lithium dendrite on a surface of the electrodeposition inducing layer may be not effectively suppressed or reduced. Stability of the anode and a lithium battery may decrease, wherein the anode include the electrodeposition inducing layer containing the first carbonaceous material that contains no nitrogen element or contains a small amount of nitrogen element, and thus cycle characteristics of the lithium battery may decrease.

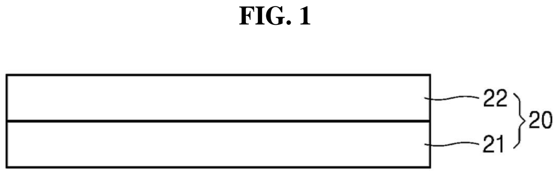

Referring to FIG. 1, an anode 20 includes an anode current collector 21 and a deposition inducing layer 22 disposed on the anode current collector 21 and containing the first carbonaceous material, wherein the first carbonaceous material is an amorphous carbon containing nitrogen elements, and an amount of the nitrogen elements is more than about 1 wt% with respect to the total weight of the electrodeposition inducing layer.

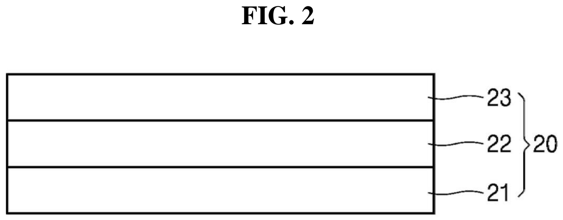

Referring to FIG. 2, an anode 20 includes an anode current collector 21, an electrodeposition inducing layer 22 disposed on the anode current collector 21 and containing a first carbonaceous material, and a lithium electrodeposition layer 23 disposed on the electrodeposition inducing layer 22, wherein the first carbonaceous material is amorphous carbon containing nitrogen elements, and an amount of the nitrogen elements is more than about 1 wt% with respect to the total weight of the electrodeposition inducing layer.

### [Anode: Anode current collector]

Referring to FIGS. 1 and 2, the anode 20 includes the anode current collector 21.

Any material that does not react with lithium, that is, any material that does not form an alloy or compound with lithium and has conductivity (e.g., is a conductor) may be utilized for the materials providing the anode current collector 21. The anode current collector 21 is, for example, a metal or an alloy. The anode current collector 210 may be formed of, for example, indium (In), copper (Cu), magnesium (Mg), stainless steel (SUS), titanium (Ti), iron (Fe), cobalt (Co), nickel (Ni), zinc (Zn), aluminum (Al), germanium (Ge), lithium (Li), or an alloy thereof.

The anode current collector 21 includes, for example, a first metal substrate. The first metal substrate may include the first metal as a main component or may include (e.g., consist of) the first metal. The first metal substrate may include the first metal as a main component or may include (e.g., consist of) the first metal. An amount of the first metal included in the first metal substrate may be, for example, about 90 wt% or more, about 95 wt% or more, about 99 wt% or more, or about 99.9 wt% or more, with respect to the total weight of the first metal substrate. The first metal substrate may include, for example, a material that does not react with lithium, that is, does not form an alloy and/or compound with lithium.

Examples of the first metal includes copper (Cu), nickel (Ni), stainless steel, iron (Fe), cobalt (Co), and/or the like, but is not limited thereto, and any metal capable of being utilized as a current collector in the technical art may be utilized. The first metal substrate may be composed of, for example, one selected from among the above-described metals, or an alloy of two or more metals. The first metal substrate may be, for example, in the form of a sheet or foil (e.g., may include a sheet or foil). The thickness of the anode current collector 21 may be, for example, about 5 µm to about 50 µm, about 10 µm to about 50 µm, about 10 µm to about 40 µm, or about 10 µm to about 30 µm, but is not necessarily limited to these ranges. The thickness may vary depending on target characteristics of the lithium battery.

The anode current collector 21 may further include a coating layer containing a second metal on the first metal substrate.

The anode current collector 21 may include, for example, the first metal substrate, and a coating layer disposed on the first metal substrate and containing the second metal. The second metal has a higher Mohs hardness than the first metal. The coating layer containing the second metal is harder than the substrate containing the first metal. Therefore, deterioration of the first metal substrate may be prevented or reduced. The Mohs hardness of the material constituting the first metal substrate may be, for example, about 5.5 or less. The Mohs hardness of the first metal may be, for example, about 5.5 or less, about 5.0 or less, about 4.5 or less, about 4.0 or less, about 3.5 or less, or about 3.0 or less. The Mohs hardness of the first metal may be, for example, about 2.0 to about 6.0. The coating layer may include the second metal. The coating layer may include, for example, the second metal as a main component or may be formed of the second metal. An amount of the second metal included in the coating layer may be, for example, about 90 wt% or more, about 95 wt% or more, about 99 wt% or more, or about 99.9 wt% or more, with respect to the total weight of the coating layer. The coating layer may include, for example, a material that does not react with lithium, that is, does not form an alloy and/or compound with lithium. The Mohs hardness of the material constituting the coating layer may be, for example, about 6.0 or higher. For example, the Mohs hardness of the second metal may be about 6.0 or more, about 6.5 or more, about 7.0 or more, about 7.5 or more, about 8.0 or more, about 8.5 or more, or about 9.0 or more. The Mohs hardness of the second metal may be, for example, about 6.0 to about 12. An excessively low Mohs hardness of the second metal may make it difficult to suppress or reduce deterioration of the anode current collector. An excessively high Mohs hardness of the second metal may make it difficult to perform the processing of the anode current collector. The second metal may be, for example, at least one selected from among titanium (Ti), manganese (Mn), niobium (Nb), tantalum (Ta), iridium (Ir), vanadium (V), rhenium (Re), osmium (Os), tungsten (W), chromium (Cr), boron (B), ruthenium (Ru), and rhodium (Rh). The coating layer may include, for example, one selected from among the above-described metals or an alloy of two or more metals thereof. The difference between Mohs hardness of the first metal included in the first metal substrate and Mohs hardness of the second metal included in the coating layer may be, for example, about 2 or more, about 2.5 or more, about 3 or more, about 3.5 or more, or about 4 or more. If (e.g., when) the first metal and the second metal have such a difference in Mohs hardness, deterioration of the anode current collector may be more effectively suppressed or reduced. The coating layer may have a single-layer structure or a multi-layer structure of two or more layers. The coating layer may have, for example, a two-layer structure including a first coating layer and a second coating layer. The coating layer may have, for example, a three-layer structure including a first coating layer, a second coating layer, and a third coating layer. The coating layer may have a thickness of, for example, about 10 nm to about 1 µm, about 50 nm to about 500 nm, about 50 nm to about 200 nm, or about 50 nm to about 150 nm. An excessively small thickness of the coating layer makes it difficult to suppress or reduce substantially non-uniform growth of the lithium-containing metal layer. As the thickness of the coating layer is increased, the cycle characteristics of the lithium battery are improved, but if (e.g., when) the coating layer is too thick, the energy density of the lithium battery is reduced, and the coating layer may not be easy to form. The coating layer may be disposed on the first metal substrate by, for example, a vacuum deposition method, a sputtering method, a precipitation method, etc., but the method of providing the coating layer is not necessarily limited to these methods, and any method capable of providing a coating layer in the art may be utilized herein.

For example, the anode current collector 21 may have a more reduced thickness than an anode current collector contained in comparable anodes. Therefore, the anode according to the present disclosure includes, for example, a thin film current collector, and thus is distinguished from comparable electrodes including a thick film current collector. The electrode according to embodiments uses a thin film current collector having a reduced thickness, in the anode including the thin film current collector, a lithium electrodeposition layer may have a relatively increased thickness. As a result, the energy density of the lithium battery utilizing these electrode increases. The anode current collector 21 may have a thickness of, for example, about 15 µm or less, about 14.5 µm or less, or about 14 µm or less. The anode current collector 21 may have a thickness of, for example, about 0.1 µm or more and less than or equal to about 15 µm, about 1 µm to about 14.5 µm, about 2 µm to about 14 µm, about 3 µm to about 14 µm, about 5 µm to about 14 µm, or about 10 µm to about 14 µm.

The anode current collector 21 may be in the form selected from among, for example, a sheet, a foil, a film, a plate, a porous structure, a mesoporous structure, a perforation-containing structure, a polygonal ring structure, mesh, foam, and a non-woven fabric structure, but is not limited to these shapes, and any form capable of being utilized in the art may be utilized.

The anode current collector 21 may include, for example, a base film and a metal substrate disposed on at least one side (e.g., one or both (e.g., opposite) sides) of the base film. The anode current collector 21 may have a structure including a substrate, wherein the substrate includes, for example, a base film and a metal base layer disposed on at least one side (e.g., one or both (e.g., opposite) of the base film. An interlayer may be additionally disposed on the metal substrate.

For example, the base film may contain, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or combinations thereof. Due to the inclusion of thermoplastic polymers in the base film, the base film may be melted in the event of a short circuit, inhibiting the rapid increase in current. In embodiments, the base film may be an insulator. According to embodiments, the metal base layer may include, copper (Cu), stainless steel, titanium (Ti), iron (Fe), cobalt (Co), nickel (Ni), or an alloy thereof. The metal base layer may act as an electrochemical fuse and is cut in case of overcurrent to perform a short circuit prevention function. The limit current and the maximum current may be adjusted by adjusting the thickness of the metal base layer. The metal base layer may be plated or deposited on the base film. If (e.g., when) the thickness of the metal base layer is reduced, the limit current and/or the maximum current of anode current collector 21 are reduced, and thus stability of the lithium metal battery during a short circuit may be improved. A lead tab may be added on the metal base layer for external connection. The lead tab may be welded to the metal base layer or the metal base layer/base film laminate by ultrasonic welding, laser welding, spot welding, and/or the like. During welding, the base film and/or metal base layer may melt, and the metal base layer may be electrically connected to the lead tab. To make welding between the metal base layer and the lead tab more robust, a metal chip may be added between the metal base layer and the lead tab. The metal chip may be a chip of the same material as the metal of the metal base layer. In embodiments, the metal chip may be a metal foil or a metal mesh. In embodiments, the metal chip may be, for example, aluminum foil, copper foil, or stainless steel (e.g., SUS) foil. By positioning the metal chip on the metal base layer and welding the same to the lead tab, the lead tab may be welded to the metal chip/metal base layer laminate or the metal chip/metal base layer/base film laminate. During welding, the metal layer or the metal layer/metal chip laminate may be electrically connected to the lead tab while the base film, the metal layer, and/or the metal chip are melted. A metal chip and/or lead tab may be added onto a portion of the metal base layer. In embodiments, the thickness of the base film may be about 1 µm to about 50 µm, about 1.5 µm to about 50 µm, about 1.5 µm to about 40 µm, or about 1 µm to about 30 µm. If (e.g., when) the base film has these ranges of thickness, the weight of the anode assembly may be more effectively reduced. In embodiments, the melting point of the base film may be about 100 °C to about 300 °C, about 100 °C to about 250 °C, or about 100 °C to about 200 °C. If (e.g., when) the base film has these ranges of a melting point, the base film may be melted and easily coupled to the lead tab in the process of welding the lead tab. Surface treatment such as corona treatment may be performed on the base film to improve adhesion between the base film and the metal base layer. In embodiments, the thickness of the metal base layer may be about 0.01 µm to about 3 µm, about 0.1 µm to about 3 µm, about 0.1 µm to about 2 µm, or about 0.1 µm to about 1 µm. If (e.g., when) the metal base layer has these ranges of thickness, stability of the anode may be ensured while conductivity is maintained. In embodiments, the thickness of the metal chip may be about 2 µm to about 10 µm, about 2 µm to about 7 µm, or about 4 µm to about 6 µm. If (e.g., when) the metal chip has these ranges of thickness, connection between the metal layer and the lead tab may be more easily performed. If (e.g., when) the anode current collector 21 have such a structure, the weight of an electrode may be reduced and, as a result, the energy density may be improved.

### [Anode: Electrodeposition inducing layer]

Referring to FIG. 1 to FIG. 2, the anode 20 may include an anode current collector 21 and an electrodeposition inducing layer 22 disposed on the anode current collector 21. The electrodeposition inducing layer 22 contains a first carbonaceous material. The first carbonaceous material is amorphous carbon containing a nitrogen element, wherein an amount of the nitrogen element is more than about 1 wt% with respect to the total weight of the electrodeposition inducing layer 22. Because the electrodeposition inducing layer 22 includes the first carbonaceous material containing the nitrogen element, the lithium metal may be more uniformly plated on the electrodeposition inducing layer. In embodiments, the amount of the nitrogen elements exceeds about 1 wt% with respect to the total weight of the electrodeposition inducing layer, and thus density of the lithium electrodeposition layer formed on the electrodeposition inducing layer may increase and generation and/or growth of the lithium dendrite may be effectively inhibited.

According to embodiments, the amount of the nitrogen element is about 1.1 wt% or more, about 1.2 wt% or more, about 1.1 wt% to about 10 wt%, or about 1.2 wt% to about 10 wt% with respect to the total weight of the electrodeposition inducing layer.

According to embodiments, the amount of the nitrogen element among the first carbonaceous material is more than or equal to about 10 wt%, about 11 wt% or more, or about 12 wt% or more with respect to the total weight of the first carbonaceous material. If (e.g., when) the amount of the nitrogen element among the first carbonaceous material falls within the above-described ranges, the amount of the nitrogen element within the electrodeposition inducing layer 22 may exceed about 1 wt% more easily.

According to embodiments, the first carbonaceous material may be a carbide of a polymer containing a nitrogen element (e.g., containing the nitrogen element of the first carbonaceous material). In embodiments, the first carbonaceous material may be a carbide prepared by carbonizing a polymer containing a nitrogen element at about 800 °C or more. In embodiments, carbonization of the polymer containing the nitrogen element may be performed at a temperature of about 800 °C or more in a nitrogen atmosphere for about 3 hours or more.

According to embodiments, the polymer containing the nitrogen element may include a sulfurized polyacrylonitrile (SPAN). In embodiments, the sulfurized polyacrylonitrile includes a three-dimensional cross-linked fused ring, and thus structural stability may be improved. In embodiments, the sulfurized polyacrylonitrile may include large amounts of nitrogen (N) elements derived from a nitrile group included in a three-dimensional cross-linked fused ring. Because the nitrogen element included in the sulfurized polyacrylonitrile is contained in a fused ring, even if (e.g., when) the sulfurized polyacrylonitrile is carbonized at a temperature of about 800 °C or higher, the nitrogen element remains in the carbide, and, as a result, the first carbonaceous material in which the amount of the nitrogen element is more than about 10 wt % with the first carbonaceous material may be more easily prepared. In the electrode position inducing layer 22 containing a first carbonaceous material in which the amount of the nitrogen element in the first carbonaceous material exceeds about 10 wt% with respect to the total weight of the first carbonaceous material, the amount of the nitrogen element may more easily exceed about 1 wt%. For example, the nitrogen element contained in the first carbonaceous material may react with lithium ions during charging and discharging to form lithium nitride, such as Li₃N, and this lithium nitride may uniformly plate lithium ions on the electrodeposition inducing layer.

For example, the sulfurized polyacrylonitrile may be manufactured, for example, by heating sulfur powder and polyacrylonitrile powder under a closed, non-oxidizing atmosphere. If (e.g., when) sulfur powder and polyacrylonitrile powder are heated, (1) a ring closure reaction, in which polyacrylonitrile is three-dimensionally cross-linked to form a fused ring, such as a 6-membered ring, and (2) a reaction between sulfur and polyacrylonitrile are performed concurrently (e.g., simultaneously), so that sulfurized polyacrylonitrile in which sulfur is bonded to the fused ring may be obtained. In this case, the fused ring may include a nitrogen element. As a result, in the preparing the first carbonaceous material by carbonizing the polymer including sulfurized polyacrylonitrile, nitrogen element included in a fused ring of the sulfurized polyacrylonitrile is not decomposed to remain during the carbonizing process, and thus the amount of the nitrogen element included in the first carbonaceous material may easily exceed about 10 wt%. In the electrodeposition inducing layer including the first carbonaceous material containing the nitrogen element, the amount of the nitrogen element included in the electrodeposition inducing layer easily exceeds about 1 wt%, and thus a lithium element may be uniformly plated on the electrodeposition inducing layer.

According to embodiments, the first carbonaceous material may be amorphous carbon further containing a sulfur element. In embodiments, in a case where the first carbonaceous material further contains sulfur, the nitrogen element may more easily remain during a preparation process of the first carbonaceous material.

In embodiments, the first carbonaceous material may be a carbide of a polymer containing a nitrogen element and a sulfur element. In embodiments, carbonization of the polymer containing the nitrogen element and the sulfur element may be performed at a temperature of about 800 °C or more in a nitrogen atmosphere.

According to embodiments, the polymer containing the nitrogen element and the sulfur element may include sulfurized polyacrylonitrile. For example, the sulfurized polyacrylonitrile may include a fused ring having a plurality of sulfur elements bonded continuously. For example, the sulfurized polyacrylonitrile may include a fused ring formed by three or more sulfur elements continuously bonded. In this case, the fused ring having sulfur elements bonded continuously may include a nitrogen element. Therefore, the polymer containing the sulfurized polyacrylonitrile includes large amounts of nitrogen elements included in a fused ring, and thus the nitrogen element amount in the first carbonaceous material may increase because the nitrogen element remains without being decomposed in the process of carbonizing the polymer. A sulfur element included in the polymer is decomposed to be removed during the process of carbonizing, and thus a nitrogen element ratio in the polymer may further increase.

According to embodiments, the amount of sulfur elements among the first carbonaceous material may be about 0.1 wt% to about 50 wt%.

According to embodiments, if (e.g., when) the first carbonaceous material includes a sulfur element, the electrodeposition inducing layer 22 including the first carbonaceous material may further include Li₂S (including the sulfur element). Additional ionic conductivity may be imparted to the electrodeposition inducing layer 22 because Li₂S may have, for example, an ionic conductivity of about 1×10⁻⁵ S/cm or more. Li₂S may be derived from the sulfur element included in the first carbonaceous material. Li₂S may be generated, for example, by a reaction of the sulfur element included in the first carbonaceous material and the lithium ions while charging the lithium battery. The electrodeposition inducing layer 22 additionally includes Li₂S, and thus the electrodeposition inducing layer 22 may have increased ionic conductivity.

According to embodiments, an intensity ratio (Id/Ig) of D peak to G peak of the first carbonaceous material, obtained from Raman analysis spectrum may be about 0.8 to about 1.5. From the obtained results, it can be confirmed that the intensity ratio (Id/Ig) of D peak to the G peak of the first carbonaceous material is within the range of the amorphous carbon.

According to embodiments, the first carbonaceous material may be, for example, in a form of particles. The particles of the first carbonaceous material may have an average particle diameter of, for example, about 50 nm to about 10 µm, or about 500 nm to about 10 µm. If (e.g., when) the first carbonaceous material has these ranges of average diameters, the lithium ion may be plated on the electrodeposition inducing layer more uniformly.

An amount of the first carbonaceous material may be, for example, about 1 wt% to about 99 wt%, about 10 wt% to about 90 wt%, about 20 wt% to about 80 wt%, about 20 wt % to about 50 wt%, or about 30 wt% to about 50 wt% with respect to the total weight of the electrodeposition inducing layer 21. If (e.g., when) the electrodeposition inducing layer 22 contains the first carbonaceous material in these ranges of amounts, cycle characteristics of the lithium battery containing the electrodeposition inducing layer 22 may be further improved.

The electrodeposition inducing layer 22 may further include a second carbonaceous material. For example, the electrodeposition inducing layer 22 may further include a second carbonaceous material distinct from the first carbonaceous material. The electrodeposition inducing layer 22 may include, for example, the first carbonaceous material and the second carbonaceous material, and the first carbonaceous material may be different from the second carbonaceous material. The second carbonaceous material may be, for example, a carbonaceous conductive material. An internal resistance of the electrodeposition inducing layer 22 decrease, and conductivity may be imparted to a protecting layer because the electrodeposition inducing layer 22 further includes the second carbonaceous material.

According to embodiments, the electrodeposition inducing layer 22 further includes a second carbonaceous material, and thus dispersibility of the first carbonaceous material may be improved. Therefore, the lithium ion is more uniformly plated on the electrodeposition inducing layer 22, and thus partial deposition and/or growth of the lithium dendrite may be more effectively inhibited. For example, the second carbonaceous material may function as a carbonaceous dispersant.

According to embodiments, the second carbonaceous material may be, for example, an amorphous carbon. The electrodeposition inducing layer 22 contains a second carbonaceous material, which is an amorphous carbon, and thus lithium ion may move more rapidly through a surface of the amorphous carbon. The second carbonaceous material may be porous or non-porous. The second carbonaceous material may be, for example, in the form of a particle. The second carbonaceous material may be, for example, a spherical particle, a plate-shaped particle, a needle-shaped particle, or a combination thereof. The second carbonaceous material may have, for example, irregular shape. The second carbonaceous material may have an average particle diameter, for example, about 10 nm to about 500 nm, about 10 nm to about 300 nm, about 10 nm to about 200 nm, about 10 nm to about 100 nm, about 10 nm to about 50 nm, about 30 nm to about 50 nm, or about 40 nm to about 50 nm. If (e.g., when) the second carbonaceous material has these ranges of particle diameters, cycle characteristics of the lithium battery including the electrodeposition inducing layer may be further improved. The particle diameter of the carbonaceous material may be measured by utilizing a laser diffraction method, a scanning electron microscopy (SEM), a transmission electron microscopy, an elemental force microscopy, etc.

According to embodiments, the second carbonaceous material may include carbon black, acetylene black, Denka black, Ketjen black, a carbon nanotube, a carbon nanofiber, a carbon nanobelt, graphene, graphene oxide, fullerene, activated carbon, a carbon fiber, or a combination thereof. For example, the second carbonaceous material may include carbon black, acetylene black, Denka black, Ketjen black, or a combination thereof.

An amount of the second carbonaceous material may be, for example, about 1 wt% to about 99 wt%, about 10 wt% to about 50 wt%, or about 20 wt% to about 40 wt% with respect to the total weight of the electrodeposition inducing layer. If (e.g., when) the electrode position inducing layer 22 contains the second carbonaceous material in these ranges of amounts, cycle characteristics of the lithium battery containing the electrodeposition inducing layer 22 may be further improved.

According to embodiments, a ratio of the first carbonaceous material to the second carbonaceous material may be about 1 :99 to about 99:1, about 10:90 to about 90:10. About 1:99 to about 50:50, or about 10:90 to about 50: 50.

The electrodeposition inducing layer 22 may further include a metal oxide. The electrodeposition inducing layer 22 may include, for example, the first carbonaceous material and the metal oxide concurrently (e.g., simultaneously). The electrodeposition inducing layer 22 may include, for example, the first carbonaceous material, the second carbonaceous material and the metal oxide concurrently (e.g., simultaneously). In embodiments, the electrodeposition inducing layer 22 including the first carbonaceous material and the metal oxide concurrently (e.g., simultaneously) is an organic-inorganic complex layer. The electrodeposition inducing layer 22 further includes the metal oxide, and thus strength and/or elasticity of the electrodeposition inducing layer 22 may be improved. The electrodeposition inducing layer 22 has improved durability, and thus cycle characteristics of the lithium battery containing the electrodeposition inducing layer 22 may be further improved.

The metal oxide may be, for example, in a form of particles. The form of the metal oxide particle is not limited. The metal oxide particle may be, for example, a spherical particle, a plate-shaped particle, a needle-shaped particle, or a combination thereof. The metal oxide particle may have, for example, an irregular form. The average particle diameter of the particles of the metal oxide may be, for example, about 100 nm to about 2 µm, about 200 nm to about 1 µm, or about 400 nm to about 1 µm. If (e.g., when) the metal oxide has these ranges of particle diameters, cycle characteristics of the lithium battery including the electrodeposition inducing layer 22 may be further improved. The metal oxide may be, for example, porous, or non-porous. The metal oxide may be, for example, crystalline or amorphous.

Examples of the metal oxide may include Nb₂O₅, TiO₂, Al₂O₃, SiO₂, BaTiO₃, metal organic framework (MOF), polyhedral oligomeric silsesquioxanes (POSS), Li₂CO₃, Li₃PO₄, Li₂O, montmorillonite, ZrO₂, CeO₂, Mn₃O₄, or a combination thereof but are not limited thereto. Any metal oxide capable of being utilized as a metal oxide in the art may be utilized.

The metal oxide may have, for example, lithiophilicity. The metal oxide having the lithiophilicity may react with a lithium ion during charging and discharging of the lithium battery. The metal oxide may include, for example, a pseudo-capacitive oxide reacting with lithium to form a lithium metal oxide. The oxide providing a pseudo-capacity may be, for example, Nb₂O₅, TiO₂, etc. Nb₂O₅ may a crystalline structure belonging to an orthorhombic structure. Nb₂O₅ may form, for example, react with a lithium ion to form LiₓNb₂O₅ (0<x<1) during the charging process of the lithium battery. The pseudo-capacitive oxide acts, for example, as a pseudo-capacitor, and thus may serve to store and/or disperse lithium on the electrodeposition inducing layer 22. The electrode position inducing layer 22 containing the pseudo-capacitive oxide may have improved lithium ion conduction properties, and localization of lithium may be prevented or reduced. Therefore, the lithium ion may be uniformly plated on the electrodeposition inducing layer 22.

An amount of the metal oxide may be, for example, about 5 parts by weight to about 60 parts by weight, about 10 parts by weight to about 50 parts by weight, about 10 parts by weight to about 40 parts by weight, or about 10 parts by weight to about 30 parts by weight with respect to 100 parts by weight of the first carbonaceous material. An amount of the metal oxide contained in the electrodeposition inducing layer 22 may be, for example, about 1 wt% to about 40 wt%, about 5 wt% to about 30 wt%, or about 5 wt% to about 20 wt% with respect to the total weight of the protecting layer. The electrodeposition inducing layer 22 contains the metal oxide these ranges of amounts, and thus cycle characteristics of the lithium battery containing the electrodeposition inducing layer 22 may be further improved.

The electrodeposition inducing layer 22 may include, for example, the metal oxide of about 5 parts by weight to about 40 parts by weight, and the second carbonaceous material of about 50 parts by weight to about 100 parts by weight, with respect to 100 parts by weight of the first carbonaceous material. The electrodeposition inducing layer 22 contains such a composition, and thus cycle characteristics of the lithium battery containing the electrodeposition inducing layer 22 may be further improved.

According to embodiments, the electrodeposition inducing layer 22 may further include a binder. The electrodeposition inducing layer 22 includes the first carbonaceous material and the binder, and thus adhesion between the first carbonaceous materials may be further improved. The electrodeposition inducing layer 22 may maintain a certain shape, and mechanical strength of the electrodeposition inducing layer 22 may be improved because the electrodeposition inducing layer 22 includes the binder.

The binder may be, for example, a non-conductive binder or a conductive binder. The conductive binder may be, for example, an ion-conducting binder, an electron-conducting binder, or a combination thereof.

The binder may be, for example, polystyrene sulfonate (PSS), a polyvinylidene fluoride-hexafluoropropylene copolymer (PVDF-HFP), polyvinyl fluoride (PVF), polyvinylidene fluoride (PVDF), poly(meth)acrylic acid, poly(meth)acrylate, poly(methylmethacrylate) (PMMA), polyethylene oxide (PEO), polyethylene glycol (PEG), polyacrylonitrile (PAN) ), an acrylonitrile-styrene-butadiene copolymer, polytetrafluoroethylene (PTFE), polyethylenedioxythiophene (PEDOT), polypyrrole (PPY), polyaniline, and polyacetylene, polytetrafluoroethylene (PTFE), styrene-butadiene rubber (SBR), polyimide (PI), polyamidimide (PAI), carboxymethyl cellulose (CMC), polyvinyl chloride (PVC), polyacrylonitrile (PAN), modified polyphenylene oxide (PPO), polyethylene (PE), polypropylene (PP), etc., but is not limited thereto. The ion-conducting binder may include a polar functional group. The ion-conducting binder containing the polar functional group may be, for example, nafion, aquivion, flemion, gore, aciplex, morgane ADP, sulfonated poly(ether ether ketone) (SPEEK), sulfonated poly(arylene ether ketone ketone sulfone) (SPAEKKS), sulfonated poly(aryl ether ketone) (SPAEK), poly[bis(benzimidazobenzisoquinolinones)] (SPBIBI), poly(styrene sulfonate) (PSS), lithium 9,10-diphenylanthracene-2-sulfonate (DPASLi+), etc. The electron-conducting binder may be, for example, polyacetylene, polythiophene, polypyrrole, poly(p-phenylene), poly(phenylenevinylene), poly(phenylenesulfide), polyaniline, etc.

The binder may be, for example, an acryl-based binder or a fluorine-based binder. The fluorine-based binder contained in the electrodeposition inducing layer 22 may be, for example, polyvinylidene fluoride (PVDF), polytetrafluoroethylene (PTFE), polyvinylidene fluoride-hexafluoropropylene (PVDF-HFP), etc. For example, the acryl-based binder contained in the electrodeposition inducing layer 22 may be poly(meth)acrylic acid, poly(meth)acrylate, polymethyl(meth)acrylate, polyacrylonitrile, an acrylonitrile-styrene-butadiene copolymer, etc.

An amount of the binder may be, for example, about 1 part by weight to about 30 parts by weight, about 5 parts by weight to about 30 parts by weight, or about 10 parts by weight to about 30 parts by weight with respect to 100 parts by weight of the first carbonaceous material. The amount of the binder contained in the electrodeposition inducing layer 22 may be, for example, about 1 wt% to about 25 wt%, or about 5 wt% to about 20 wt%, with respect to the total weight of the electrodeposition inducing layer 22. If (e.g., when) the electrodeposition inducing layer 22 contains the binders in these amount ranges, cycle characteristics of the lithium battery containing the electrodeposition inducing layer 22 may be further improved.

The thickness of electrodeposition inducing layer 22 may be, for example, about 1 µm to about 50 µm, about 3 µm to about 20 µm, about 5 µm to about 20 µm, or about 7 µm to about 15 µm, and is not necessarily limited to these ranges. The thickness may vary depending on shapes, capacity, and/or the like of the lithium battery. An excessively small thickness of the electrodeposition inducing layer 22 may make it difficult to perform a function of the electrodeposition inducing layer 22. An excessive increase in the thickness of the electrodeposition inducing layer 22 may increase an internal resistance of the lithium battery, so that an energy density of the lithium battery may be reduced.

### [Anode: Lithium electrodeposition layer]

Referring to FIG. 2, the anode 20 includes: an anode current collector 21; an electrodeposition inducing layer 22 disposed on the anode current collector 21; and a lithium electrodeposition layer 23 disposed on the electrodeposition inducing layer 22, wherein the lithium electrodeposition layer 23 includes a lithium metal or a lithium alloy.

After the anode 20 is introduced to the lithium battery with the cathode and the electrolyte, a lithium metal is plated on the electrodeposition inducing layer 22 due to charging, and thus the electrode position inducing layer 22 may include lithium electrodeposition layer 23. The lithium electrodeposition layer 23 may include, for example, a lithium metal or a metal alloy.

For example, the lithium alloy is an alloy of lithium and other metal that may be alloyed with lithium, and for example, the lithium- alloy may be a lithium-zinc alloy, a lithium-magnesium alloy, a lithium-tin alloy, etc.

According to embodiments, the lithium electrodeposition layer 23 may include a spherical lithium metal or a spherical lithium alloy. For example, the lithium electrodeposition layer 23 is formed on the electrodeposition inducing layer 22 containing the first carbonaceous material that contains a nitrogen atom, and thus plating of the lithium ion is induced by the nitrogen atom. Therefore, the spherical lithium metal, or lithium alloy may be plated on the electrodeposition inducing layer 22. As a result, the lithium electrodeposition layer 23 may include a spherical lithium metal or lithium alloy.

According to embodiments, the spherical lithium metal or lithium alloy may have an average particle diameter (D50) of about 0.1 µm to about 15 µm, about 0.1 µm to about 12 µm, about 0.1 µm to about 10 µm, about 1 µm to about 15 µm, about 2 µm to about 15 µm, about 3 µm to about 15 µm, or about 3 µm to about 10 µm.

The lithium electrodeposition layer 23 may have a thickness of, for example, about 50 µm or less, about 40 µm or less, about 35 µm or less, about 30 µm or less, about 1 µm to about 50 µm, about 1 µm to about 40 µm, about 5 µm to about 40 µm, or about 10 µm to about 35 µm. For example, if (e.g., when) the lithium electrodeposition layer 23 has these ranges of thicknesses, an energy density of the lithium battery may be further improved.

According to embodiments, the lithium electrodeposition layer 23 may have a thickness of about 35 µm or less, about 30 µm or less, about 28 µm or less, about 10 µm to about 35 µm, about 10 µm to about 30 µm, about 10 µm to about 28 µm at full charge.

According to embodiments, the density of the lithium electrodeposition layer 23 may be about 0.3 g/cc to about 0.5 g/cc.

### [Anode: Anode interlayer]

Referring to FIG. 1 and FIG. 2, the anode 20 may selectively further include the anode interlayer disposed between the anode current collector 21 and the electrodeposition inducing layer 22. Due to the additional inclusion of the anode interlayer in the anode 20, generation and/or growth of a lithium dendrite in the anode 20 may be more effectively inhibited. The anode interlayer may not be provided.

The anode interlayer may include, for example, for example, an anode active material, and a binder. The anode active material is an anode material capable of performing lithiation and delithiation. The anode active material included in the anode interlayer is, for example, in the form of a particle. The average particle diameter of the anode active material that is in the form of a particle shape may be, for example, about 10 nm to about 4 µm, about 10 nm to about 1 µm, about 10 nm to about 500 nm, about 10 nm to about 100 nm, or about 20 nm to about 80 nm. As the anode active material has an average particle diameter within the above ranges, reversible plating and/or dissolution of lithium may be more easily performed during charging and discharging. The average particle diameter of the anode active material is, for example, a median diameter (D50), measured utilizing a laser type or kind particle size distribution analyzer.

The anode active material interlayer contained in the anode interlayer may include at least one selected from among a carbonaceous anode active material and a metal or metalloid anode active material. The carbonaceous anode active material may be, for example, amorphous carbon. Examples of the carbonaceous anode active material may include carbon black (CB), acetylene black (AB), furnace black (FB), Ketjen black (KB), graphene, and/or the like, however, the carbonaceous anode active material is not necessarily limited thereto, and any material categorized as amorphous carbon in the art may be utilized. The amorphous carbon is carbon that has no crystallinity or has very low crystallinity and is distinguished from crystalline carbon or graphite-based carbon. The metal or metalloid anode active material may include at least one selected from among the group consisting of gold (Au), platinum (Pt), palladium (Pd), silicon (Si), silver (Ag), aluminum (Al), bismuth (Bi), tin (Sn), and zinc (Zn), but is necessarily limited thereto, and any material that utilized as a metal anode active material or a metalloid anode active material providing an alloy or a compound with lithium in the art may be utilized. For example, nickel (Ni) is not metal anode active material in the present specification because it does not form an alloy with lithium. The anode interlayer includes a single anode active material or includes a mixture of a plurality of different anode active materials in the above-described active materials. The anode interlayer may include, for example, a mixture with one or more selected from among the group consisting of gold (Au), platinum (Pt), palladium (Pd), silicon (Si), silver (Ag), aluminum (Al), bismuth (Bi), tin (Sn), and zinc (Zn). A mixing ratio of the mixture may be a weight ratio, and may be for example, about 10:1 to about 1:2, about 10:1 to about 1:1, about 7:1 to about 1:1, about 5:1 to about 1:1, or about 4:1 to about 2:1. The anode active material included in the anode interlayer may include, for example, a mixture of a first particle formed of amorphous carbons, and a second particle formed of a metal or metalloid. The metal may include, for example, gold (Au), platinum (Pt), palladium (Pd), silicon (Si), silver (Ag), aluminum (Al), bismuth (Bi), tin (Sn), and zinc (Zn), etc. An amount of the second particle is about 8 wt% to about 60 wt%, about 10 wt% to about 50wt%, about 15 wt% to about 40 wt%, or about 20 wt% to about 30 wt% with respect the total weight of the mixture. If (e.g., when) the second particle has these ranges of amount, for example cycle characteristics of the lithium battery may be further improved.

The binder included in the anode interlayer may be, for example, styrene-butadiene rubber (SBR), polytetrafluoroethylene, polyvinylidene fluoride, polyethylene, a vinylidene fluoride/hexafluoropropylene copolymer, polyacrylonitrile, polymethyl methacrylate, etc., but is not necessarily limited thereto, and any binder that is utilized in the art as a binder may be utilized. The binder may include a single binder or a plurality of different binders. If (e.g., when) the anode interlayer includes no binder, the anode interlayer may be easily separated from the anode current collector 21. An amount of the binder contained in the anode interlayer may be, for example, about 1 wt% to about 20 wt% with respect to the total weight of the anode interlayer.

The anode interlayer may have a thickness of, for example, about 1 µm to about 20 µm, about 1 µm to about 15 µm, or about 2 µm to about 10 µm, or about 3 µm to about 7 µm. The anode interlayer may have a thickness of, for example, about 1 % to about 50 %, about 1 % to about 30 %, about 1 % to about 10 %, or about 1 % to about 5 % with respect of a thickness of the cathode active material layer. If (e.g., when) the thickness of the anode interlayer is excessively small, a lithium dendrite formed between the anode interlayer and the anode current collector may collapse the anode interlayer, and cycle characteristics of the lithium battery may not be improved. If (e.g., when) the anode interlayer has an excessively increased thickness, the energy density of a lithium battery utilizing the anode 20 may be decreased and cycle characteristics may not be improved. If (e.g., when) the thickness of the anode interlayer decrease, for example, the charging capacity of the anode interlayer may also decrease. The charging capacity of the anode interlayer may be, for example, about 0.1 % to about 50 %, about 1 % to about 30 %, about 1 % to about 10 %, about 1 % to about 5 %, or about 1 % to about 2 %, with respect to the charging capacity. An excessively small charging capacity of the anode interlayer makes the lithium dendrite formed between the anode interlayer and the anode current collector collapse the anode interlayer, so that cycle characteristics of the lithium battery may not be improved. An excessive increase in the charging capacity of the anode interlayer makes energy density of the lithium battery utilizing the anode 20 decrease, so that cycle characteristics may not be improved. The charging capacity of a cathode active material layer may be obtained by multiplying the charging capacity density (mAh/g) of the cathode active material by the mass of the cathode active material in the cathode active material layer. If (e.g., when) several types (kinds) of cathode active materials are utilized, the charging capacity density × mass value is calculated for each cathode active material, and the sum of the calculated values is the charging capacity of the cathode active material layer. The charging capacity of the anode interlayer is also calculated in substantially the same way. The charging capacity of the anode interlayer may be obtained by multiplying the charging capacity density (mAh/g) of the anode active material by the mass of the anode active material in the anode interlayer. If (e.g., when) several types (kinds) of anode active materials are utilized, the charging capacity density x mass value is calculated for each anode active material, and the sum of the calculated values is the capacity of the anode interlayer. Herein, the charging capacity densities of the cathode active material and the anode active material are capacities estimated utilizing an all-solid half-cell utilizing a lithium metal as a counter electrode. The charging capacity of the cathode active material layer and the anode interlayer are directly measured by measuring the charging capacity utilizing an all-solid half-cell. If (e.g., when) the measured charging capacity is divided by the mass of each active material, the charging capacity density may be obtained. In some embodiments, the charging capacity of the cathode active material layer and the anode interlayer may be the initial charging capacity measured at the time of the first cycle charge.

### [Lithium battery]

The lithium battery according to embodiments includes a cathode; the above-described anode; an electrolyte disposed between the cathode and the anode. For example, the anode includes an electrode position inducing layer containing the first carbonaceous material. The lithium battery may provide improved capacity and excellent or suitable lifespan characteristics concurrently (e.g., simultaneously) by including the above-described anode. The lithium battery may be, for example, a lithium primary battery, a lithium secondary battery, a lithium-sulfur battery, a lithium-air battery, a lithium metal battery, an anodeless lithium metal battery, and/or the like, but is not limited thereto, and any lithium battery that is utilized in the art may be utilized.

A lithium battery is manufactured by the following example methods, but is not necessarily limited to these methods and is adjusted according to conditions.

### (Anode)

An anode including an electrodeposition inducing layer containing the above-described first carbonaceous material is prepared.

### (Cathode)

First, a cathode active material, a conductive material, a binder, and a solvent are mixed to prepare a cathode active material composition. The prepared cathode active material composition is directly applied onto an aluminum current collector and dried to prepare a cathode plate on which a cathode active material layer is formed. In some embodiments, the cathode active material composition may be cast on a separate support, and then a film obtained by peeling from the support is laminated on the aluminum current collector to prepare a cathode plate on which a cathode active material layer is formed.

The cathode active material is a lithium-containing metal oxide, and any material utilized in the art may be utilized without limitation. For example, one or more selected from among composite oxides of lithium and a metal selected from cobalt, manganese, nickel, and a combination thereof may be utilized, and an example thereof may be a compound represented by any one of following: LiₐA_{1-b}B_{b}D₂(where, 0.90 ≤ a ≤ 1, and 0 ≤ b ≤ 0.5 are satisfied); LiₐE_{1-b}B_{b}O_{2-c}D_{c}(where, 0.90 ≤ a ≤ 1, 0 ≤ b ≤ 0.5, 0 ≤ c ≤ 0.05); LiE_{2-b}B_{b}O_{4-c}D_{c}(where, 0 ≤ b ≤ 0.5, 0 ≤ c ≤ 0.05); LiₐNi_{1-b-c}Co_{b}B_{c}D_{α}(where, 0.90 ≤ a ≤ 1, 0 ≤ b ≤ 0.5, 0 ≤ c ≤ 0.05, 0 < α ≤ 2); LiₐNi_{1-b-c}CO_{b}B_{c}O_{2-α}F_{α}(where, 0.90 ≤ a ≤ 1, 0 ≤ b ≤ 0.5, 0 ≤ c ≤ 0.05, 0 < α < 2); LiₐNi_{1-b-c}Co_{b}B_{c}O_{2-α}F₂(where, 0.90 ≤ a ≤ 1, 0 ≤ b ≤ 0.5, 0 ≤ c ≤ 0.05, 0 < α < 2); LiₐNi_{1-b-c}Mn_{b}B_{c}D_{α}(where, 0.90 ≤ a ≤ 1, 0 ≤ b ≤ 0.5, 0 ≤ c ≤ 0.05, 0 < α ≤ 2); LiₐNi_{1-b-c}Mn_{b}B_{c}O_{2-α}F_{α}(where, 0.90 ≤ a ≤ 1, 0 ≤ b ≤ 0.5, 0 ≤ c ≤ 0.05, 0 < α < 2); LiₐNi_{1-b-c}Mn_{b}B_{c}O_{2-α}F₂(where, 0.90 ≤ a ≤ 1, 0 ≤ b ≤ 0.5, 0 ≤ c ≤ 0.05, 0 < α < 2); LiₐNi_{b}E_{c}G_{d}O₂(where, 0.90 ≤ a ≤ 1, 0 ≤ b ≤ 0.9, 0 ≤ c ≤ 0.5, 0.001 ≤ d ≤ 0.1); LiₐNi_{b}Co_{c}Mn_{d}GeO₂ (where, 0.90 ≤ a ≤ 1, 0 ≤ b ≤ 0.9, 0 ≤ c ≤ 0.5, 0 ≤ d ≤0.5, and 0.001 ≤ e ≤ 0.1); LiₐNiG_{b}O₂ (where, 0.90 ≤ a ≤ 1 and 0.001 ≤ b ≤ 0.1); LiₐCoG_{b}O₂ (where, 0.90 ≤ a ≤ 1 and 0.001 ≤ b ≤ 0.1); LiₐMnG_{b}O₂ (where, 0.90 ≤ a ≤ 1 and 0.001 ≤ b ≤ 0.1); LiₐMn₂G_{b}O₄ (where, 0.90 ≤ a ≤ 1 and 0.001 ≤ b ≤ 0.1); QO₂; QS₂; LiQS₂; V₂O₅; LiV₂O₅; LiIO₂; LiNiVO₄; Li_{(3-f)}J₂(PO₄)₃(0 ≤ f ≤ 2); Li_{(3-f)}Fe₂(PO₄)₃(0 ≤ f ≤ 2); and LiFePO₄.

In the Formulae representing the above-described compounds, A is Ni, Co, Mn, or a combination thereof; B is Al, Ni, Co, Mn, Cr, Fe, Mg, Sr, V, a rare earth element, or a combination thereof; D is O, F, S, P, or a combination thereof; E is Co, Mn, or a combination thereof; F is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; and J is V, Cr, Mn, Co, Ni, Cu, or a combination thereof. A compound with a coating layer provided on the surface of the above-described compound may be utilized, and a mixture of the above-described compound and the compound provided with the coating layer may also be utilized. The coating layer provided on the surface of the above-described compound may include a coating element compound such as oxide of a coating element, hydroxide of a coating element, oxyhydroxide of a coating element, oxycarbonate of a coating element, or hydroxycarbonate of a coating element. The compound constituting the coating layer may be amorphous or crystalline. The coating element included in the coating layer may be Mg, Al, Co, K, Na, Ca, Si, Ti, V, Sn, Ge, Ga, B, As, Zr, or a mixture thereof. A method of providing the coating layer may be selected within a range that does not adversely affect the physical properties of the cathode active material. The coating method may be, for example, spray coating, dipping method, and/or the like. A detailed description of the coating method will not be provided because it may be well understood by those in the art.

The cathode active material may be, for example, LiₐNiₓCo_{y}M_{z}O_{2-b}A_{b} (1.0≤a≤1.2, 0≤b≤0.2, 0.8≤x<1, 0<y≤0.3, 0<z≤0.3, and x+y+z=1, M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B) or a combination thereof, A is F, S, Cl, Br or a combination thereof), LiNiₓCo_{y}Mn_{z}O₂ (0.8≤x≤0.95, 0≤y≤0.2, 0<z≤0.2 and x+y+z=1), LiNiₓCo_{y}Al_{z}O₂ (0.8≤x≤0.95, 0≤y≤0.2, 0<z≤0.2 and x+y+z=1), LiNiₓCo_{y}Mn_{z}Al_{w}O₂ (0.8≤x≤0.95, 0≤y≤0.2, 0<z≤0.2, 0<w≤0.2, and x+y+z+w=1), LiₐCoₓM_{y}O_{2-b}A_{b} (1.0≤a≤1.2, 0≤b≤0.2, 0.9≤x≤1, 0≤y≤0.1, and x+y=1 , M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B) or a combination thereof, and A is F, S, Cl, Br or a combination thereof), LiₐNiₓMn_{y}M'_{z}O_{2-b}A_{b} (1.0≤a≤1.2, 0≤b≤0.2, 0<x≤0.3, 0.5≤y<1, 0<z≤0.3, and x+y+z=1, M' is cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, A is F, S, Cl, Br or a combination thereof), LiₐM1ₓM2_{y}PO_{4-b}X_{b} (where, in Formula 7 above, 0.90 ≤a ≤1.1, 0≤x≤0.9, 0≤y≤0.5, 0.9<x+y<1.1, 0≤b≤2 , M1 is chromium (Cr), manganese (Mn), iron (Fe), cobalt (Co), nickel (Ni), copper (Cu), zirconium (Zr), or a combination thereof, and M2 is magnesium (Mg) or calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y) or a combination thereof, and X is O, F, S, P, or a combination thereof), LiₐM3_{z}PO₄ (0.90≤a≤1.1, 0.9≤z≤1.1, M3 is chromium (Cr), manganese (Mn), iron (Fe), cobalt (Co), nickel (Ni), copper (Cu), zirconium (Zr) or a combination thereof).

Examples of the conductive material include carbon black, graphite particles, natural graphite, artificial graphite, acetylene black, Ketjen black, a carbon fiber, a carbon nanotube; metal powders or metal fibers or metal tubes of metal, such as copper, nickel, aluminum, and silver; and a conductive polymer such as a polyphenylene derivative are utilized, but are not limited thereto, and any materials utilized as conductive materials in the art may be utilized therefor herein. In some embodiments, the cathode may not include (e.g., may exclude), for example, an additional conductive material.

The binder may be a vinylidene fluoride/hexafluoropropylene copolymer, polyvinylidene fluoride, polyacrylonitrile, polymethyl methacrylate, polytetrafluoroethylene (PTFE), a mixture of the above-described polymers, a styrene butadiene rubber-based polymer, etc. The solvent may be N-methylpyrrolidone (NMP), acetone, water, etc. However, the binder and the solvent are not limited thereto, and may be any binder or solvent that is utilized in the art.

A plasticizer or a pore forming agent may be further added to the cathode active material composition to form pores in an electrode plate.

The amounts of the cathode active material, the conductive material, the binder, and the solvent utilized for the cathode are at such levels that are commonly utilized in the lithium battery. Depending on the usage and configuration of the lithium battery, one or more among the conductive material, the binder, and the solvent may not be provided.

An amount of the binder included in the cathode may be about 0.1 wt% to about 10 wt% or about 0.1 wt% to about 5 wt%, with respect to the total weight of the cathode active material layer. The amount of the cathode active material included in the cathode may be about 80 wt% to about 99 wt%, about 90 wt% to about 99 wt%, or about 95 wt% to about 99 wt%, with respect to the total weight of the cathode active material layer.

### (Separator)

Next, a separator to be inserted between the cathode and the anode is prepared.

Any material that is commonly utilized in a separator in a lithium battery may be utilized for the separator. For example, any separator that has low resistance to ion migration of an electrolyte and excellent or suitable liquid electrolyte-wetting ability, may be utilized. The separator may be a non-woven fabric or a woven fabric including at least one selected from among glass fiber, polyester, teflon, polyethylene, polypropylene, polytetrafluoroethylene (PTFE), and a combination thereof. Separators that can be wound, such as polyethylene and polypropylene, are utilized for the lithium-ion battery, and separators with excellent or suitable organic electrolyte impregnation ability may be utilized for the lithium-ion polymer battery.

The separator is prepared by the following example method, but is not necessarily limited to this method and is adjusted depending on conditions.

First, a separator composition is prepared by mixing a polymer resin, a filler, and a solvent. The separator composition is directly applied on the electrode, and dried to form a separator. In some embodiments, after a separator composition is cast and dried on a support, a separator film peeled off from the support is laminated on the electrode to form a separator.

The polymer utilized to manufacture the separator is not limited, and any polymer utilized for the binder of an electrode plate may be utilized. For example, a vinylidene fluoride/hexafluoropropylene copolymer, polyvinylidene fluoride (PVDF), polyacrylonitrile, polymethyl methacrylate, or a mixture thereof may be utilized.

### (Electrolyte)

Next, an electrolyte is prepared.

The electrolyte may be, for example, a liquid electrolyte, a solid electrolyte, a gel electrolyte, or a combination thereof.

The electrolyte may be, for example, an organic liquid electrolyte. In embodiments, the organic liquid electrolyte may be prepared by dissolving a lithium salt in an organic solvent.

Any organic solvent that is utilized as an organic solvent in the art, may be utilized. The organic solvent may be, for example, propylene carbonate, ethylene carbonate, fluoroethylene carbonate, butylene carbonate, dimethyl carbonate, diethyl carbonate, methylethyl carbonate, methylpropyl carbonate, ethylpropyl carbonate, methylisopropyl carbonate, dipropyl carbonate, dibutyl carbonate, benzonitrile, acetonitrile, tetrahydrofuran, 2-methyltetrahydrofuran, γ-butyrolactone, dioxolane, 4-methyldioxolane, N, N-dimethylformamide, dimethylacetamide, dimethylsulfoxide, dioxane, 1,2-dimethoxyethane, sulfolane, dichloroethane, chlorobenzene, nitrobenzene, diethylene glycol, dimethylether, or a mixture thereof.

Any lithium salt may be utilized as a lithium salt in the art may be utilized. The lithium salt may be, for example, LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂)(1≤x≤20, 1≤y≤20), LiCl, Lil, or a mixture thereof. The concentration of the lithium salt may be, for example, about 0.1 M to about 5.0 M.

In embodiments, the solid electrolyte is an oxide-based solid electrolyte, a sulfide-based solid electrolyte, a polymer solid electrolyte, or a combination thereof.

The solid electrolyte may be, for example, an oxide-based solid electrolyte. The oxide-based solid electrolyte may be at least one selected from among Pb(Zr,Ti)O₃(PZT), Pb₁₋ₓLaₓZr_{1-y} Ti_{y}O₃(PLZT)(O≤x<1, O≤y<1), PB(Mg₃Nb_{2/3})O₃-PbTiO₃(PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃(0<x<2, 0<y<3), LiₓAl_{y}Ti_{z}(PO₄)₃ (0<x<2, 0<y<1, 0<z<3), Li_{1+x+y}(Al, Ga)ₓ(Ti, Ge)₂₋ₓSi_{y}P_{3-y}O₁₂(0≤x≤1 0≤y≤1), LiₓLayTiO₃ (0<x<2, 0<y<3), Li₂O, LiOH, Li₂CO₃, LiAlO₂, Li₂O-Al₂O₃-SiO₂-P₂O₅-TiO₂-GeO₂, Li₃₊ₓLa₃M₂O₁₂(M = Te, Nb, or Zr, and x is an integer of 1 to 10). The solid electrolyte may be produced by, for example, a sintering method and/or the like. For example, the oxide-based solid electrolyte is a garnet-based solid electrolyte selected from among Li₇La₃Zr₂O₁₂(LLZO) and Li₃₊ₓLa₃Zr₂₋ₐMₐO₁₂(M doped LLZO, M=Ga, W, Nb, Ta, or Al, and x is an integer from 1 to 10).

The sulfide-based solid electrolyte may include, for example, lithium sulfide, silicon sulfide, phosphorus sulfide, boron sulfide, or a combination thereof. The sulfide-based solid electrolyte particles may include Li₂S, P₂S₅, SiS₂, GeS₂, B₂S₃, or a combination thereof. The sulfide-based solid electrolyte particles may be Li₂S or P₂S₅. Sulfide-based solid electrolyte particles are suitable to have higher lithium ion conductivity than other inorganic compounds. For example, sulfide-based solid electrolytes include Li₂S and P₂S₅. If (e.g., when) the sulfide solid electrolyte material constituting the sulfide-based solid electrolyte includes Li₂S-P₂S₅, the mixed molar ratio of Li₂S to P₂S₅ may be, for example, in the range of about 50:50 to about 90:10. An inorganic solid electrolyte, prepared by adding Li₃PO₄, halogen, a halogen compound, Li₂₊₂ₓZn₁₋ₓGeO₄("LISICON," 0≤x<1), Li_{3+y}PO₄₋xNx("LIPON," 0<x<4, 0<y<3), Li_{3.25}Ge_{0.25}P_{0.75}S₄("ThioLISICON"), Li₂O-Al₂O₃-TiO₂-P₂O₅("LATP") to Li₂S-P₂S₅, SiS₂, GeS₂, B₂S₃, or a combination thereof, may be utilized as a sulfide solid electrolyte. Non-limiting examples of sulfide solid electrolyte materials include Li₂S-P₂S₅; Li₂S-P₂S₅-LiX (X=halogen element); Li₂S-P₂S₅-Li₂O; Li₂S-P₂S₅-Li₂O-LiI; Li₂S-SiS₂; Li₂S-SiS₂-LiI; Li₂S-SiS₂-LiBr; Li₂S-SiS₂-LiCl; Li2S-SiS2-B2S₃-LiI; Li2S-SiS2-P2S₅-LiI; Li₂S-B₂S₃; Li2S -P₂S₅-ZₘSₙ (0<m<10, 0<n<10, Z=Ge, Zn, or Ga); Li₂S-GeS₂; Li₂S-SiS₂-Li₃PO₄; and Li₂S-SiS₂-LiₚMO_{q} (0<p<10, 0<q<10, M=P, Si, Ge, B, Al, Ga, or In) In this regard, the sulfide-based solid electrolyte material may be prepared by treating raw starting materials (e.g., Li₂S, P₂S₅, etc.) of the sulfide-based solid electrolyte material by a melt quenching method, a mechanical milling method, and/or the like. In some embodiments, calcinations may be performed after the treatment. The sulfide-based solid electrolyte may be amorphous, crystalline, or a mixture thereof.

The polymer solid electrolyte may be, for example, an electrolyte containing a mixture of a lithium salt and a polymer or a polymer having an ion conductive functional group. The polymer solid electrolyte may be, for example, a polymer electrolyte that does not contain a liquid electrolyte. Polymers included in the polymer solid electrolyte include, for example, polyethylene oxide (PEO), polyvinylidene fluoride (PVDF), vinylidene fluoride-hexafluoropropylene (PVDF-HFP), polyethylene oxide (PEO), and a poly(styrene-b-ethylene oxide) block or reduce copolymer (PS-PEO), poly(styrene-butadiene), poly(styrene-isoprene-styrene), a poly(styrene-b-divinylbenzene) block or reduce copolymer, a poly(styrene-ethyleneoxide-styrene) block or reduce copolymer, polystyrene sulfonate (PSS), polyvinyl fluoride (PVF), poly(methylmethacrylate) (PMMA), polyethylene glycol (PEG), polyacrylonitrile (PAN), polytetrafluoroethylene (PTFE), polyethylenedioxythiophene (PEDOT), polypyrrole (PPY), polyacrylonitrile (PAN), polyaniline, polyacetylene, nafion, aquivion, flemion, gore, aciplex, morgane ADP, sulfonated poly(ether ether ketone) (SPEEK), sulfonated poly(arylene ether ketone ketone) (SPAEKKS), sulfonated poly(aryl ether ketone) (SPAEK), poly[bis(benzimidazobenzisoquinolinones)] (SPBIBI), poly(styrene sulfonate) (PSS), lithium 9,10-diphenylanthracene -2-sulfonate (DPASLi⁺), or a combination thereof, but is not limited thereto, and any material utilized as a polymer electrolyte in the art may be utilized. Any lithium salt can be utilized as long as the lithium salt may be utilized as a lithium salt in the art. The lithium salt may be, for example, LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂)(where x and y are each from 1 to 20), LiCl, Lil, or a mixture thereof.

A gel electrolyte is, for example, a gel polymer electrolyte. In some embodiments, the gel polymer electrolyte may be an electrolyte including a liquid electrolyte and a polymer or an electrolyte including an organic solvent and a polymer having an ion conductive functional group. The liquid electrolyte may be, for example, an ionic liquid, a mixture of a lithium salt and an organic solvent, a mixture of an ionic liquid and an organic solvent, or a mixture of a lithium salt, an ionic liquid and an organic solvent. The polymer may be selected from polymers utilized in solid polymer electrolytes. The organic solvent may be selected from organic solvents utilized for liquid electrolytes. The lithium salt may be selected from lithium salts utilized in solid polymer electrolytes. The ionic liquid refers to a salt that is in a liquid state at room temperature or a molten salt at room temperature, which has a melting point room temperature and consists only of ions. In some embodiments, the ionic liquid may be at least one selected from among compounds including: a) at least one cation selected from among ammonium, pyrrolidinium, pyridinium, pyrimidinium, imidazolium, piperidinium, pyrazolium, oxazolium, pyridazinium, phosphonium, sulfonium, triazolium, and a mixture thereof, and b) at least one anion selected from among BF₄⁻, PF₆⁻, AsF₆⁻, SbF₆⁻, AlCl₄⁻, HSO₄⁻, ClO₄⁻, CH₃SO₃⁻, CF₃CO₂⁻, Cl⁻, Br, I⁻, BF₄⁻, SO₄⁻, CF₃SO₃⁻, (FSO₂)₂N⁻ , (C₂F₅SO₂)₂N⁻, (C₂F₅SO₂)(CF₃SO₂)N⁻, and (CF₃SO₂)₂N⁻. A polymer solid electrolyte may be formed by wetting a polymer solid electrolyte with a liquid electrolyte in a lithium battery. The gel electrolyte may further include inorganic particles.

### (Lithium battery)

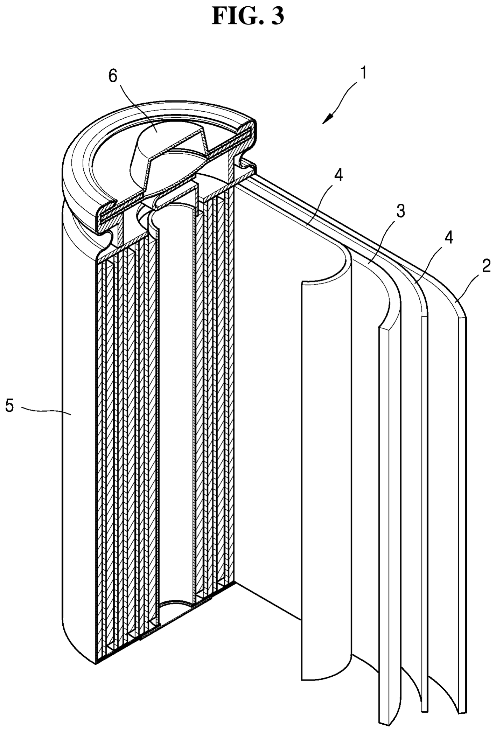

Referring to FIG. 3, a lithium battery 1 according to embodiments includes a cathode 3, the anode 2 as described above, and a separator 4. The cathode 3, the anode 2, and the separator 4 may be wound or folded to form a battery structure. The formed battery structure is accommodated in a battery case 5. An organic liquid electrolyte is injected into the battery case 5 and sealed with a cap assembly 6 to complete the manufacture of the lithium battery 1. The battery case 5 is cylindrical, but not necessarily limited to such a shape, in embodiments, a prismatic shape, a thin film shape, and/or the like.

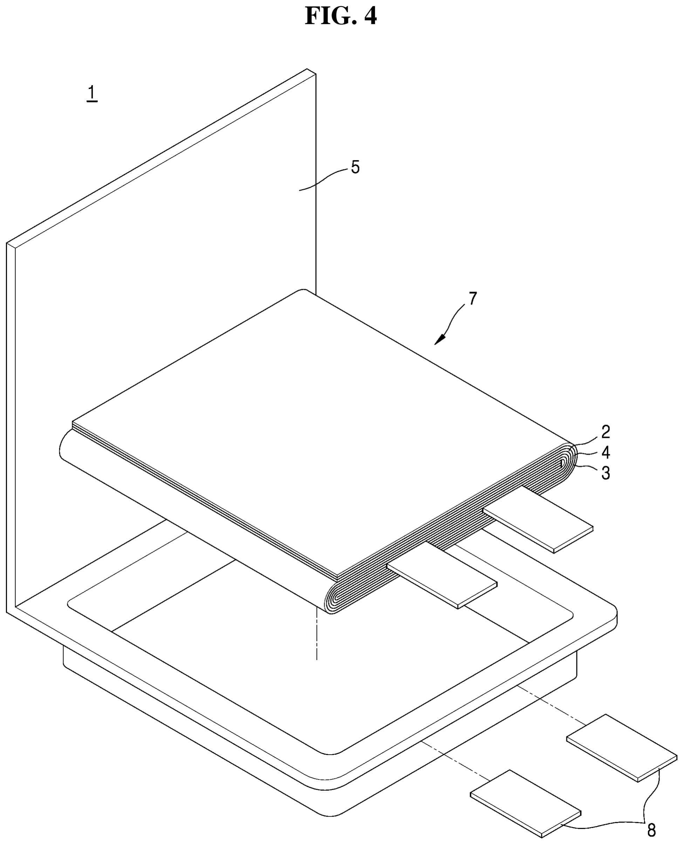

Referring to FIG. 4, a lithium battery 1 according to embodiments includes a cathode 3, the anode 2 described above, and a separator 4. The separator 4 is located between the cathode 3 and the anode 2, and the cathode 3, the anode 2, and the separator 4 may be wound or folded to form a battery structure 7. The battery structure 7 is accommodated in a battery case 5. An electrode tab 8 acting as an electrical path for inducing the current formed in the battery structure 7 to the outside may be included. An organic liquid electrolyte is injected into the battery case 5 and sealed to complete the manufacture of the lithium battery 1. The battery case 5 may have a rectangular shape, but is not necessarily limited to such a shape, and may have, for example, a cylindrical shape, a thin film type or kind, and/or the like.

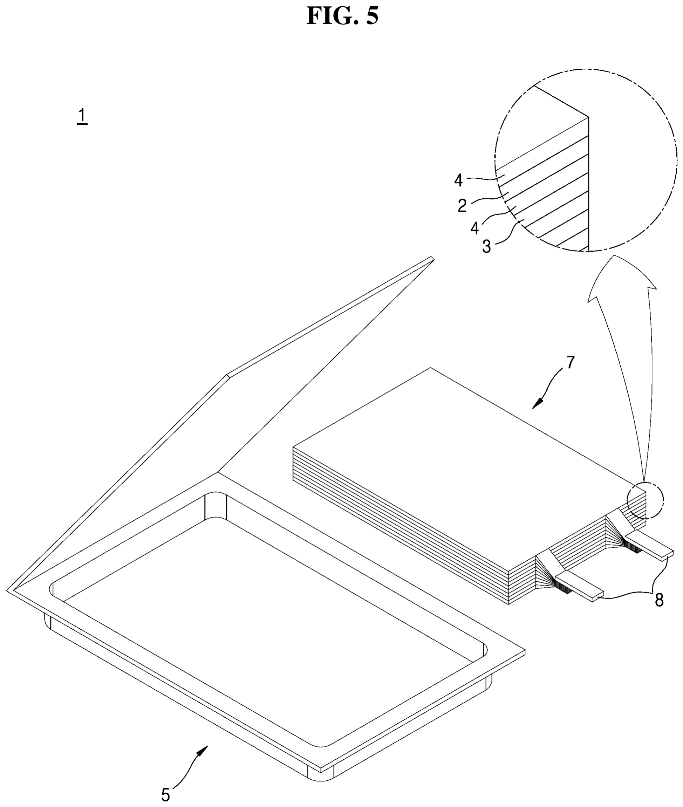

Referring to FIG. 5, a lithium battery 1 according to embodiments includes a cathode 3, the anode 2 described above, and a separator 4. The separator 4 is located between the cathode 3 and the anode 2 to form a battery structure. The battery structure 7 is stacked in a bi-cell structure, and then accommodated in the battery case 5. An electrode tab 8 acting as an electrical path for inducing the current formed in the battery structure 7 to the outside may be included. An organic liquid electrolyte is injected into the battery case 5 and sealed to complete the manufacture of the lithium battery 1. The battery case 5 has a rectangular shape, but is not necessarily limited to such a shape, and in embodiments, has a cylindrical shape, a thin film type or kind, and/or the like.

A pouch-type or kind lithium metal battery corresponds to the lithium metal battery shown in FIGS. 3 to 5 utilizing a pouch as a battery case. A pouch-type or kind lithium battery includes one or more battery structures. A separator is disposed between a cathode and an anode to form a cell structure. The battery structures are stacked in a bi-cell structure, and immersed in an organic electrolyte solution, and then accommodated and sealed in a pouch, thereby completing the preparation of a pouch-type or kind lithium battery. For example, in some embodiments, the cathode, the anode, and the simply are stacked and accommodated in the form of an electrode assembly in a pouch. In embodiments, the cathode, the anode, and the separator are wound or folded into an electrode assembly in the form of a jelly roll, and then, accommodated in the pouch. Then, an organic liquid electrolyte is injected into the pouch, which is then sealed to complete the manufacture of the lithium battery.

The lithium battery according to the present disclosure has excellent or suitable discharge capacity and lifespan properties and high energy density, and thus, in embodiments, is utilized for an electric vehicle (EV). For example, the lithium batteries are utilized for hybrid vehicles such as plug-in hybrid electric vehicles (PHEVs). The lithium batteries are also utilized in fields requiring large amounts of power storage. For example, the lithium batteries are utilized for electric bicycles, power tools, etc.

A plurality of lithium batteries are stacked to form a battery module, and a plurality of battery modules may form a battery pack. Such a battery pack may be utilized in any device requiring high capacity and high output. For example, the battery pack may be utilized for laptops, smartphones, electric vehicles, etc. In embodiments, the battery module may include, for example, a plurality of batteries and a frame for holding the same. The battery pack may include, for example, a plurality of battery modules and a bus bar connecting the same. The battery module and/or battery pack may further include a cooling device. A plurality of battery packs may be controlled or selected by a battery management system. The battery management system may include a battery pack and a battery control device connected to the battery pack.

The lithium battery including a solid electrolyte will be described hereinafter in more detail.

### (All-solid lithium battery)

The lithium battery may be, for example, an all-solid lithium battery including a solid electrolyte. The all-solid lithium battery may provide improved capacity and excellent or suitable lifespan characteristics at the same time by including the anode.

The all-solid lithium battery is manufactured by the following example methods, but is not necessarily limited to this method and is adjusted according to conditions.

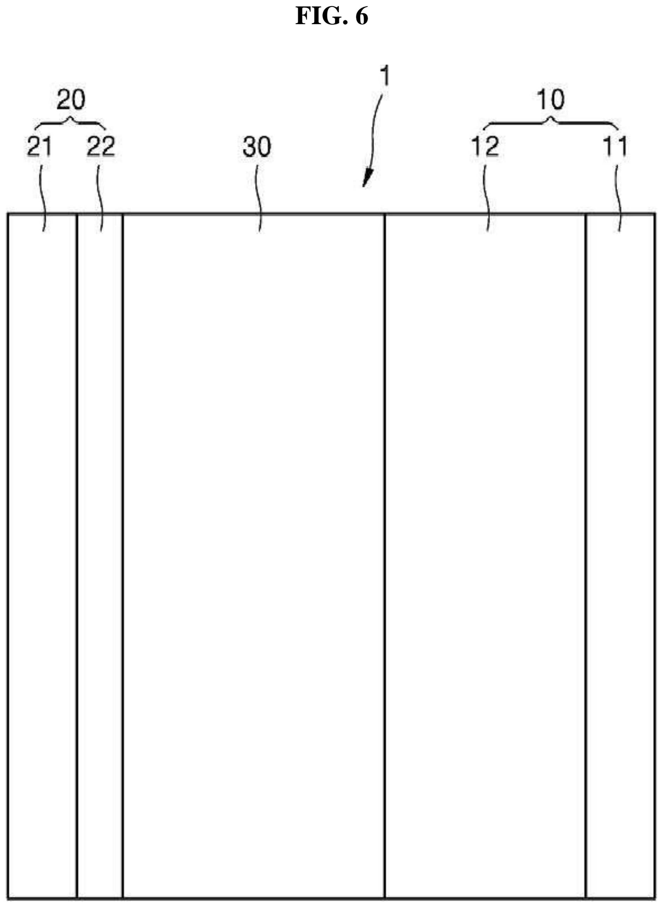

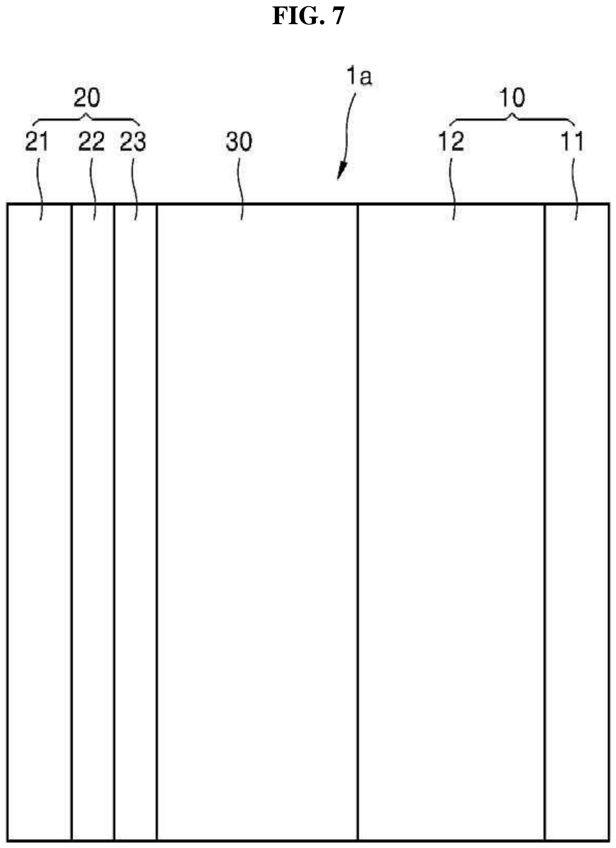

Referring to FIG. 6 and FIG. 7, an all-solid lithium battery 1 includes: a cathode 10; the above-described anode 20; and a solid electrolyte layer 30 disposed between the cathode 10 and the anode 20. In embodiments, the solid electrolyte layer 30 includes an inorganic solid electrolyte. The solid electrolyte layer 30 includes, for example, a sulfide-based solid electrolyte or an oxide-based solid electrolyte.

### (Anode)

An anode including the above-described lithium metal or lithium alloy is prepared.

### (Cathode)

Referring to FIG. 6 and FIG. 7, the cathode 10 includes a cathode current collector 11 and a cathode active material layer 12 disposed on the cathode current collector. The cathode active material layer 12 includes a cathode active material. The cathode active material is referred to the description of the above-described lithium battery.

The cathode active material layer 12 may further include a solid electrolyte in addition to the cathode active material. The solid electrolyte included in the cathode 10 may be the same as or different from a solid electrolyte included in a solid electrolyte layer 30. The detailed description about the solid electrolyte included in the cathode 10 is referred to the description of solid electrolyte layer 30. The solid electrolyte utilized in the cathode active material layer 12 may have a smaller D50 average particle diameter than the solid electrolyte utilized in the solid electrolyte layer 30. In embodiments, the D50 average particle diameter of the solid electrolyte utilized in the cathode active material layer 12 may be about 90 % or less, about 80 % or less, about 70 % or less, and about 60 % or less, about 50 % or less, about 40 % or less, about 30 % or less, or about 20 % or less of the D50 average particle diameter of the solid electrolyte utilized in the solid electrolyte layer 30. The D50 average particle diameter of the solid electrolyte utilized in the cathode active material layer 12 may be, for example, about 0.1 µm to about 2 µm, about 0.2 µm to about 1.5 µm, or about 0.3 µm to about 1.0 µm. An amount of the solid electrolyte included in the cathode active material layer 12 may be about 1 wt% to about 15 wt%, about 5 wt% to about 15 wt%, or about 8.0 wt% to about 12.0 wt% with respect to the total weight of the cathode active material layer 12.

The cathode active material layer 12 may include a binder. The binder is, for example, styrene butadiene rubber (SBR), polytetrafluoroethylene, polyvinylidene fluoride, polyethylene, and/or the like, but is not necessarily limited thereto, and any binder that may be utilized in the art may be utilized. An amount of the binder included in the cathode active material layer 12 may be about 0.1 wt% to about 5 wt%, about 0.5 wt% to about 3 wt%, or about 1.0 wt% to about 2.0 wt% with respect to the total weight of the cathode active material layer 12.

The cathode active material layer 12 may include a conductive material. The conductive material may be, for example, a carbonaceous conductive material or a metal-based conductive material. The conductive material is, for example, graphite, carbon black, acetylene black, Ketjen black, carbon fiber, carbon tube, metal powder, and/or the like, but is not limited thereto, and any conductive material that may be utilized in the art may be utilized. An amount of the conductive material included in the cathode active material layer 12 may be about 0.1 wt% to about 10 wt%, about 0.5 wt% to about 5 wt%, or about 1.0 wt% to about 4.0 wt% with respect to the total weight of the cathode active material layer 12. The cathode active material layer 12 may further include, for example, additives such as a filler, a coating agent, a dispersant, and an ion conductive supplement in addition to the above-described cathode active material, solid electrolyte, binder, and conductive material.

Examples of the cathode current collector 11 may include, for example, aluminum (Al), indium (In), copper (Cu), magnesium (Mg), stainless steel, titanium (Ti), iron (Fe), cobalt (Co), nickel (Ni), zinc (Zn), germanium (Ge), lithium (Li), a plate or foil made of alloy thereof, etc. The cathode current collector 11 may not be provided. The cathode current collector 11 may further include a carbon layer disposed on at least one side (e.g., one or both (e.g., opposite) sides) of the metal substrate. By additionally disposing a carbon layer on the metal substrate, the metal of the metal substrate may be prevented or reduced from being corroded by a solid electrolyte contained in the cathode layer and an interfacial resistance between the cathode active material layer 12 and the cathode current collector 11 may be reduced. The carbon layer may have a thickness of, for example, about 1 µm to about 5 µm, about 1 µm to about 4 µm, or about 1 µm to about 3 µm. An excessively thin thickness of the carbon layer makes it difficult to completely block or reduce a contact between the metal substrate and the solid electrolyte. An excessively thick thickness of the carbon layer makes an energy density of the all-solid secondary battery be reduced. The carbon layer may include an amorphous carbon, a crystalline carbon, and/or the like. The cathode current collector 11 including a metal substrate and selectively containing a carbon layer may have a thickness of, for example, about 10 µm to about 50 µm, about 10 µm to about 40 µm or about 10 µm to about 30 µm, but is not limited these ranges, and may be selected depending on properties of the target all-solid lithium battery.

In some embodiments, the cathode 10 may further include a cathode current collector 11, a cathode active material layer 12 disposed on the cathode current collector 11 and an inactive member disposed on at least one side (e.g., one or both (e.g., opposite) sides) of the cathode active material layer. An area of the cathode active material layer 12 may be smaller than that of a solid electrolyte layer 30 contacting with the cathode active material layer 12. The inactive member may be disposed around (e.g., surrounding) sides of the cathode active material layer 12, and thus area error between the cathode active material layer 12 and the solid electrolyte layer 30 may be corrected. The interactive member is a member that include no electrochemically active material, for example, an electrode active material. The electrode active material is a material absorbing/emitting lithium. The inactive member is a material other than the electrode active material, and is a member formed of a material utilized in the art. The inactive member may contact the solid electrolyte layer 30 while around (e.g., surrounding) sides of the cathode active material layer 12. The inactive member contacts the solid electrolyte layer 30 while around (e.g., surrounding) the sides of the cathode active material layer 12, and thus cracks in solid electrolyte layer 30, occurred due to a pressure difference during a press process, may be effectively suppressed or reduced in the solid electrolyte layer 30 that does not contact the cathode active material layer 12. The area of the inactive member corrects the error of the areas between the cathode active material layer 12 and the solid electrolyte layer 30, thereby being capable of effectively suppressing cracks in a solid electrolyte layer 30, occurred due to a pressure difference during a press process. The interactive member may be disposed between the cathode current collector 11 and the solid electrolyte layer 30, facing each other. The interactive member may serve as a filler filling a space between the cathode current collector 11 and the solid electrolyte layer 30, facing each other. The interactive member may include one or more selected from among a lithium ion insulator and a lithium ion conductor. The interactive member may be an electronic insulator. For example, the interactive member may be not an electronic insulator. The interactive member may be an organic material, an inorganic material, or an organic-inorganic composite material. The organic material may be, for example, a polymer. The inorganic material may be, for example, a ceramic such as a metal oxide. The organic-inorganic composite material may be a composite of a polymer and a metal oxide. The interactive member may include, for example, one or more selected from among an insulating polymer, an ion-conducting polymer, an insulating inorganic material, an oxide-based solid electrolyte, a sulfide-based solid electrolyte. The interactive member may be, for example, an olefin-based polymer such as polypropylene (PP) and polyethylene (PE). The inactive member 40 may be, for example, a gasket. The inactive member may have the same or similar thickness as a thickness of the cathode active material layer 12.

### (Solid electrolyte layer)

Referring to FIG. 6 to FIG. 7, the solid electrolyte layer 30 may be disposed between the cathode layer 10 and the anode layer 20, and for example includes a sulfide-based solid electrolyte.

The sulfide-based solid electrolyte may include one or more selected from among, for example, Li₂S-P₂S₅, Li₂S-P₂S₅-LiX, where X is a halogen element, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ, where m and n are a positive number, and Z is one among, Ge, Zn, and Ga, Li₂S-GeS₂, Li₂S-SiS₂-Li₃PO₄, Li₂S-SiS₂-LiₚMO_{q}, where p and q is a positive number, and M is one among and P, Si, Ge, B, Al, Ga In, Li₇₋ₓPS₆₋ₓClₓ, where 0 ≤x ≤2, Li₇₋ₓPS₆₋ₓBrₓ, where 0 ≤x ≤2, and Li₇₋ₓPS₆₋ₓIₓ, where 0 ≤x ≤2. The sulfide-based solid electrolyte is manufactured by processing a starting raw materials such as Li₂S, P₂S₅ by a melting quenching method or a mechanical milling method. After the process, a heat treatment may be performed. The solid electrolyte may be amorphous, crystalline, or a mixture thereof. The solid electrolyte may include, for example, at least sulfur (S), phosphorus (P) and lithium (Li) as components among the above-described sulfide-based solid electrolyte material. For example, the solid electrolyte may be materials including Li₂S-P₂S₅. As the sulfide-based solid electrolyte material providing a solid electrolyte, if (e.g., when) materials including Li₂S-P₂S₅ is utilized, a mixing ratio of Li₂S to P₂S₅ is in ranges such as Li₂S : P₂S₅ = about 50 : 50 to about 90 : 10.

The sulfide-based solid electrolyte may include, for example, an argyrodite type or kind solid electrolyte represented by Formula 1.

Formula 1 Li⁺₁₂₋ₙ₋ₓAⁿ⁺X²⁻₆₋ₓY⁻ₓ

In the formula, A is P, As, Ge, Ga, Sb, Si, Sn, Al, In, Ti, V, Nb, or Ta, X is S, Se, or Te, Y is Cl, Br, I, F, CN, OCN, SCN, or N₃, and 1 ≤n ≤5, 0 ≤x ≤2. The sulfide-based solid electrolyte may be an argyrodite-type or kind (e.g., argyrodite) compound including one or more selected from Li₇₋ₓPS₆₋ₓClₓ, where 0 ≤x ≤2, Li₇₋ₓPS₆₋ₓBrₓ, where 0≤x≤2, and Li₇₋ₓPS₆₋ₓIₓ, where 0≤x≤2. The sulfide-based solid electrolyte may be an argyrodite-type or kind (e.g., argyrodite) compound including one or more selected from, for example, Li₆PS₅Cl, Li₆PS₅Br and Li₆PS₅I . The argyrodite-type or kind (e.g., argyrodite) solid electrolyte may have a density of about 1.5 g/cc to about 2.0 g/cc. The internal resistance of the all-solid secondary battery decreases and penetration of the solid electrolyte layer due to Li may be effectively suppressed or reduced because the argyrodite-type or kind (e.g., argyrodite) solid electrolyte has the density of about 1.5 g/cc or more.

The sulfide-based solid electrolyte may have an elastic modulus, that is Young's modulus, of, for example, about 35 GPa or less, about 30Gpa or less, about 27 Gpa or less, about 25 Gpa or less, or about 23 Gpa or less. The sulfide-based solid electrolyte may have an elastic modulus, that is Young's modulus, of, for example, about 10 to about 35 Gpa, about 10 to about 30 Gpa, about 10 to about 27 Gpa, about 10 to about 25 Gpa, or about 10 to about 23 Gpa. If (e.g., when) the sulfide-based solid electrolyte has these ranges of elastic modulus, the temperature and/or pressure required for sintering is reduced, so sintering of the solid electrolyte may be performed more easily.

The solid electrolyte utilized in a solid electrolyte layer 30 may have a D50 average particle diameter of, for example, about 1 µm to about 10 µm, about 1.5 µm to about 7 µm, or about 2 µm to about 5 µm.

An amount of the sulfide-based solid electrolyte included in the solid electrolyte layer 30 may be, for example, about 97 to about 100 wt%, about 98 to about 99.9 wt%, or about 98.5 to about 99.0 wt% with respect to the total weight of the solid electrolyte layer 30.

The solid electrolyte layer 30 may further include, for example, a binder. The binder included in the solid electrolyte layers 30, 30a, 30b may be, for example, styrene butadiene rubber (SBR), polytetrafluoroethylene, polyvinylidene fluoride, polyethylene, and/or the like, but is not limited thereto, and any binder that may be utilized in the art may be utilized. The binder of the solid electrolyte layer 30 may be the same as or different from the binder included in the cathode active material layer 12 and the anode active material layer 22.

An amount of the binder included in the solid electrolyte layer 30 may be, for example, about 0.1 to about 3 wt%, about 0.5 to about 2 wt%, or about 1.0 to about 2.0 wt% with respect to the total weight of the solid electrolyte layer 30.

Referring to FIG. 6 and FIG. 7, the all-solid lithium battery 1 includes a solid electrolyte layer 30, a cathode layer 10 disposed on at least one side (e.g., one or both (e.g., opposite) sides) of the solid electrolyte layer 30, and an anode layer 20 disposed on another side of the solid electrolyte layer 30. The cathode layer 30 includes a cathode active material layer 12 contacting the solid electrolyte layer 30 and a cathode current collector 11 contacting the cathode active material layer 12, and the anode layer 20 includes an anode active material layer 22 contacting the solid electrolyte layer 30 and an anode current collector 21 contacting the anode active material layer 22. In the all-solid lithium battery 1, for example, the cathode active material layer 12 and the anode active material layer 22 are respectively disposed on both (e.g., simultaneously) sides of the solid electrolyte layer 30, the cathode current collector 11 and the anode current collector 21 are disposed on the cathode active material layer 12 and the anode active material layer 22, respectively, to thereby complete the all-solid type or kind lithium metal battery 30. In some embodiments, the anode active material layer 22, the solid electrolyte layer 30, the cathode active material layer 12, the cathode current collector 11 are sequentially stacked on the anode current collector 21 to thereby complete the all-solid state lithium metal battery 40.

### [Method of manufacturing anode]

A manufacturing method of an anode for a lithium metal battery according to embodiments includes: providing an anode current collector; and providing an electrodeposition inducing layer on the anode current collector, wherein an amount of nitrogen elements in the electrodeposition inducing layer is about 1 wt% or more with respect to the total weight of the first carbonaceous material. A lithium battery including the anode manufactured in the above-described way provides improved cycle characteristics.

First, an anode current collector is provided. The anode current collector may be understood by referring to the description provided in connection with the anode described above. For example, a copper foil is provided as an anode current collector.

Next, an electrode position inducing layer is provided on the anode current collector. The electrodeposition inducing layer may be provided, for example, by mixing the first carbonaceous material and the binder with a solvent to prepare a slurry, then applying the slurry onto a metal substrate and drying the resultant. The electrodeposition inducing layer may be provided, for example, by mixing the first carbonaceous material, the second carbonaceous material, and the binder with a solvent to prepare a slurry, then applying the slurry onto a metal substrate and drying the resultant.

The coating method is not limited and may utilize a doctor blade and/or the like in the coating. The slurry may include, for example, the above-described first carbonaceous material, the binder, and the solvent. The slurry may further include a second carbonaceous material. The slurry may further include a metal oxide. The slurry may include, for example, the first carbonaceous material, the second carbonaceous material, the binder and the solvent, which are previously described. The slurry may include, for example, the first carbonaceous material, the metal oxide, the binder and the solvent. The metal oxide, the second carbonaceous material, the binder may be understood by referring to the description provided in connection with the anode described above. The solvent may be an organic solvent. The solvent may be, for example, NMP and/or the like, but is not necessarily limited thereto, and any solvent that is utilized in the art may be utilized.

According to embodiments, the first carbonaceous material may be manufactured by carbonizing a polymer containing a nitrogen element. For example, the above-described first carbonaceous material may be directly manufactured by carbonizing sulfurized polyacrylonitrile (SPAN).

For example, SPAN may be manufactured by a following method. A mixed raw material in which the polyacrylonitrile powder and sulfur powder are mixed is heated. The mixed raw material may be mixed with common mixing devices such as a mixer, a mortar, a ball mill, etc. A material in which sulfur and polyacrylonitrile are simply mixed may be utilized as the mixed raw material. In some embodiments, the mixed raw materials molded into a pellet type or kind may be utilized. The mixed raw materials may be formed of only polyacrylonitrile and sulfur (S), or may include suitable or common materials such as a conductive material (e.g., a conductor), capable of being applied to the anode.

By heating a mixed raw material during the heat treatment process, sulfur (S) contained in the mixed raw material is introduced in the polyacrylonitrile structure. The heat treatment process may be performed in a closed system or in an opened system. To suppress or reduce a loss of sulfur (S) vapor, the treatment may be performed in the closed system. An atmosphere of the heat treatment may be an atmosphere that does not prevent or reduce sulfur (S) from being accepted in polyacrylonitrile, for example, an atmosphere that contains no hydrogen, or a non-oxidizing atmosphere. If (e.g., when) hydrogen is present in the heat treatment atmosphere, sulfur (S) reacts with hydrogen in the reaction system and is converted to hydrogen sulfide, so that sulfur may be removed from the reaction system. By performing a heat treatment in the non-oxidizing atmosphere, sulfur in the vapor state reacts with polyacrylonitrile concurrently (e.g., simultaneously) with a cyclization reaction of polyacrylonitrile, thereby obtaining sulfurized polyacrylonitrile (SPAN). The non-oxidizing atmosphere includes an atmosphere in which the pressure is reduced to a low oxygen concentration such that no oxidation reaction proceeds, an inert gas atmosphere such as nitrogen or argon, a sulfur gas atmosphere, etc. In the closed, non-oxidizing atmosphere, for example, mixed raw materials may be added in a container that is kept airtight enough to prevent or reduce loss of sulfur (S) vapor, and the inside of the container may be heated under reduced pressure or in an inert gas atmosphere. In some embodiments, the mixed raw materials may be heated while being vacuum-packed with a material such as an aluminum laminated film which is difficult to react with sulfur vapor. The heat treatment temperature of the mixed raw material during the heat treatment process may be a temperature at which sulfur is introduced into polyacrylonitrile and the generated sulfurized polyacrylonitrile is not denatured. The heat treatment temperature may be about 250 °C to about 500 °C, about 250 °C to about 400 °C, or about 250 °C to about 300 °C. The temperature of the heat treatment may be a temperature at which sulfur (S) vaporizes, or higher. Vaporization refers to a phase change of sulfur from a liquid or solid to a gas, and the phase change may occur due to boiling, evaporation, sublimation, etc. For example, the melting point of α-sulfur (S, rhombic sulfur) is about 112.8 °C, the melting point of β-sulfur (S, monoclinic sulfur) is about 119.6° °C, and the melting point of γ-sulfur (S, monoclinic sulfur) is about 106.8 °C. Sulfur (S) has the boiling point of about 444.7 °C. The generation of sulfur vapor may be confirmed with the naked eye if (e.g., when) the temperature of the mixed raw materials is about 150 °C or higher, because the vapor pressure of sulfur is high. If (e.g., when) the temperature of the mixed raw material is about 150 °C or higher, sulfur refluxing is possible. If (e.g., when) refluxing sulfur in the heat treatment process, a reflux device may be utilized. Even if (e.g., when) sulfur is contained in an excessive amount in the mixed raw material, a sufficient amount of sulfur (S) may be introduced into polyacrylonitrile during the heat treatment process. If (e.g., when) the excessive amount of sulfur is utilized for polyacrylonitrile, the disadvantages caused by elemental sulfur may be prevented or reduced by removing elemental sulfur from the resultant after the heat treatment process. Adverse effects may be suppressed or reduced. If (e.g., when) polyacrylonitrile and sulfur in the mixed raw materials are mixed at a weight ratio of about 1:2 to about 1:10, by the removal process of the elemental sulfur, which the resultant after the heat treatment process is heated at about 200 °C to about 250 °C while reducing pressure, the adverse effects caused by the remaining elemental sulfur may be suppressed or reduced while a sufficient amount of sulfur is introduced into polyacrylonitrile. If (e.g., when) the sulfur removal process is not performed on the resultant after the heat treatment process, the resultant of the heat treatment may be utilized as sulfurized polyacrylonitrile. If (e.g., when) the removal process of elemental sulfur is performed on the resultant after the heat treatment process, the heat treatment resultant after the removal process of elemental sulfur may be utilized as sulfurized polyacrylonitrile. The removal process of elemental sulfur may take, for example, about 1 hour to about 6 hours. If (e.g., when) sulfurized polyacrylonitrile is heated from room temperature to about 900 °C at a temperature elevating rate of about 20°C/min, the mass loss determined by thermogravimetric analysis may be about 10 % or less at about 400 °C. In some embodiments, if (e.g., when) a mixture of sulfur powder and polyacrylonitrile powder is heated under the same conditions, mass loss begins at approximately 120 °C, and if (e.g., when) the temperature is about 200 °C or more, a large mass loss may occur due to rapid loss of sulfur. Sulfur (S) in sulfurized polyacrylonitrile may exist in a stable state bonded to polyacrylonitrile, or may exist as elemental sulfur, but may be trapped in the cross-linked structure if (e.g., when) polyacrylonitrile is ring-closed by heating and in a difficult state where it is difficult to evaporate even if (e.g., when) heated. The manufactured sulfurized polyacrylonitrile may be in powder form.

The manufactured sulfurized polyacrylonitrile may be carbonized to prepare a first carbonaceous material. For example, the sulfurized polyacrylonitrile may be carbonized by heating the sulfurized polyacrylonitrile at 800 °C or higher for about 2 hours to about 6 hours at nitrogen conditions. The first carbonaceous material manufactured by carbonizing the sulfurized polyacrylonitrile may be amorphous carbon, and an amount of the nitrogen elements may be 1 wt% or more with respect to the total weight of the first carbonaceous material.

Through the following Examples and Comparative Examples, the present disclosure will be explained in more detail. However, these examples are intended to illustrate the present disclosure, and the scope of the present disclosure is not limited thereto.

### Example 1: Cu substrate/C-SPAN containing electrodeposition inducing layer anode

### (Preparation of first carbonaceous material)

Sulfur powder and polyacrylonitrile powder were ground and mixed, and then the mixture was subject to a heat treatment at about 350 °C for about 6 hours to prepare sulfurized polyacrylonitrile (SPAN) having an average particle diameter (D50) of about 0.1 µm and a color of deep brown.

The sulfurized polyacrylonitrile was subject to carbonization treatment at about 850 °C for about 4 hours to prepare a black first carbonaceous material (c-SPAN). An amount of nitrogen atoms in the manufactured first carbonaceous material was about 12 wt% with respect to the total weight of the first carbonaceous material.

### (Manufacture of Anode)

About 0.19 g of the manufactured first carbonaceous material, about 1.71 g of denka black as a second carbonaceous material, and about 0.033 g of polyvinylidene fluoride (PVDF) as a binder were prepared, and then were dry mixed utilizing the Thinky mixer at about 2000 rpm for about 5 minutes to prepare a mixture. A solvent (NMP) was added to the mixture to prepare a slurry. The slurry was applied onto a copper current collector utilizing the Doctor blade, and dried in a vacuum oven at about 80 °C to prepare an anode. The anode had a structure in which the electrodeposition inducing layer having a thickness of about 10 µm disposed on the copper current collector was applied. An amount of the nitrogen elements included in the electrodeposition inducing layer, measured by XPS analysis, was about 1.2 wt% with respect to the total weight of the electrodeposition inducing layer.

### (Manufacture of Cathode)

LiCoO₂ powder and carbon conductive material (Super-P; Timcal Ltd.) were mixed at a weight ratio of about 90:5, and then polyvinylidene fluoride (PVDF) binder solution was added such that the active material: the carbonaceous conductive material: the binder were at a weight ratio of about 90:5:5 to prepare a cathode active material slurry.

The prepared slurry was applied onto an aluminum substrate having a thickness of about 15 µm utilizing the Doctor blade, the resultant was dried under a reduced pressure at about 120 °C, and then rolled into a sheet form by utilizing a roll press to prepare a cathode.

### (Manufacture of Coin cells)

A polypropylene separator (Celgard 3510) was disposed between the prepared anode and cathode, and an electrolyte was injected to prepare a coin cell.

A solution containing about 1.15 M LiPF₆ dissolved in ethylene carbonate (EC) + ethylmethyl carbonate (EMC) + dimethyl carbonate (DMC) (about 2:4:4 volume ratio) was utilized for the electrolyte.

### Comparative Example 1: Cu substrate/C-PAN containing electrodeposition inducing layer cathode

An anode and a coin cell were manufactured in substantially the same manner as in Example 1, except that the first carbon-based material was prepared utilizing uncarbonized sulfurized polyacrylonitrile (SPAN) in the preparation of the first carbonaceous material. The amount of nitrogen included in sulfurized polyacrylonitrile (SPAN), which is the first carbonaceous material, was about 10 wt% with respect to the total weight of the sulfurized polyacrylonitrile (SPAN), and the amount of the nitrogen element contained in the electrodeposition inducing layer including the same was about 1 wt%.

### Comparative Example 2: Cu substrate/denka black-containing anode

An anode and a coin cell were manufactured in substantially the same manner as in Example 1, except that denka black was utilized in place of carbonized sulfurized polyacrylonitrile (c-SPAN), which is the first carbonaceous material, to prepare the electrodeposition inducing layer.

### Comparative Example 3: Cu substrate anode

An anode and a coin cell were manufactured in substantially the same manner as in Example 1, except that the electrodeposition inducing layer was not disposed.

### Evaluation Example 1: SEM measurement

The coin cells prepared according to Example 1 and Comparative Example 3 were constant current charged at about 25 °C at a current of about 0.1 C rate until a voltage reached at about 4.2 V (vs Li) to form a lithium electrodeposition layer on the electrodeposition inducing layer. If (e.g., when) the lithium electrodeposition layer began to be formed on the electrodeposition inducing layer and after the lithium electrodeposition layer was formed (at start of charge 100 % (@SOC 100)), the anodes according to Example 1 and Comparative Example 3 were observed by SEM, respectively.

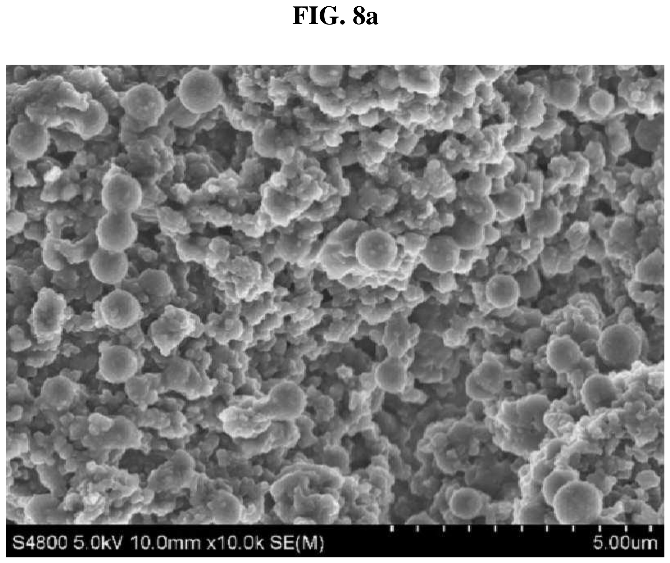

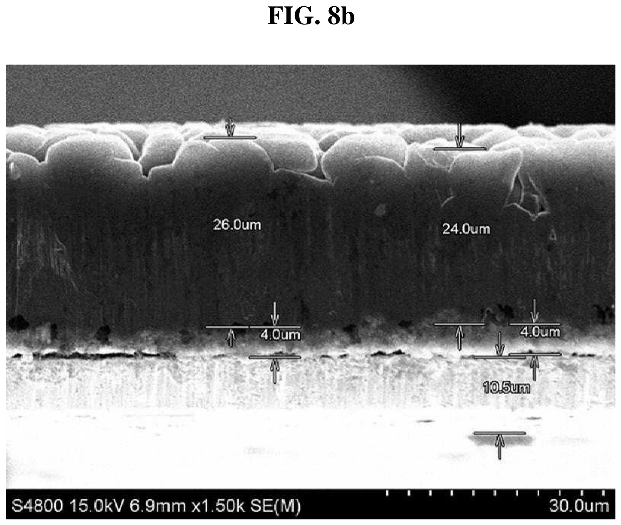

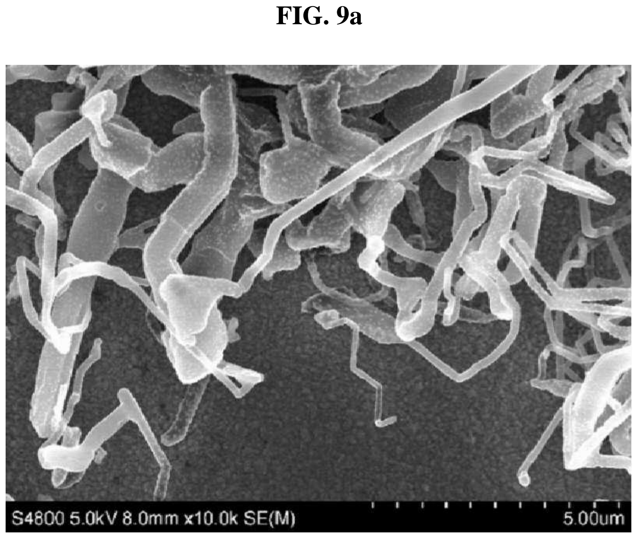

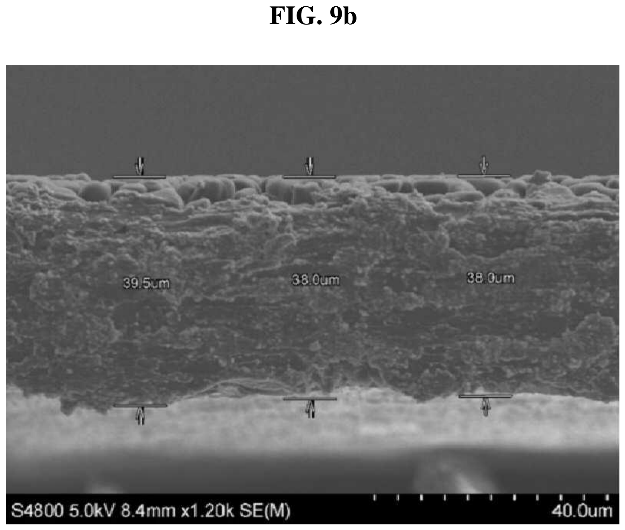

FIG. 8A shows an SEM image of an anode if (e.g., when) a lithium electrodeposition inducing layer begins to be formed on the electrodeposition inducing layer according to Example 1. FIG. 8B shows an SEM image of an anode after the lithium electrodeposition inducing layer has been formed on the electrodeposition inducing layer according to Example 1. FIG. 9A shows an SEM image of an anode if (e.g., when) a lithium electrodeposition inducing layer begins to be formed on the electrodeposition inducing layer according to Comparative Example 3. FIG. 9B shows an SEM image of an anode after a lithium electrodeposition inducing layer is formed on an electrodeposition inducing layer according to Comparative Example 3.

Referring to FIG. 8A, FIG. 8B, FIG. 9A, and FIG. 9B, in the coin cell including the electrodeposition inducing layer containing the first carbonaceous material, according to Example 1, the lithium electrodeposition layer contains a spherical lithium metal, and thus the lithium ion is uniformly plated on the electrodeposition inducing layer compared to the coin cell according to Comparative Example 3.

Therefore, in the lithium battery according to Example 2 in which the lithium electrodeposition layer has a thickness of about 25 µm at a state where the remaining capacity is about 100%, the lithium electrodeposition layer having high density was formed on the electrode position inducing layer, compared to the lithium battery according to Comparative Example 5 in which the lithium electrodeposition layer has a thickness of about 38 µm.

### Evaluation Example 2: Measurement of Nucleation overpotential and Short circuit time

Nucleation overpotential and short circuit time of the coin cells according to Example 1 and Comparative Example 1 to Comparative Example 3 were measured. The coin cells were half cells consisting of Cu foil counter electrode coated with Li metal and the electrodeposition inducing layer, and nucleation overpotential and short circuit time were measured while repeating charge/discharge cycles.

The measurement results were listed in Table 1.

**Table 1**

| | Anode current collector/ Electrodeposition inducing layer | Nucleation overpotential (mV) | Short circuit time (hr) |
|---|---|---|---|
| Example 1 | Cu substrate/C-SPAN+Denak Black (1:9) | 47 | 99 |
| Comparative Example 1 | Cu substrate/SPAN+Denak Black (1:9) | 58 | 40 |
| Comparative Example 2 | Cu substrate/Denka black | 60 | 27 |
| Comparative Example 3 | Cu substrate | 55 | 72 |

As shown in Table 1, the lithium battery according to Example 1, compared to the lithium batteries according to Comparative Example 1 to Comparative Example 3, has decreased nucleation overpotential which makes a lithium electrodeposition layer be formed on the anode at the initial stage of the deposition of lithium ions, and the short circuit time which is the time it takes for a short circuit to occur has increased.

It is determined that lithium battery according to Example 1 includes the electrodeposition inducing layer with the nitrogen amount that falls within a specific range, and thus lithium is uniformly plated and ion conductive properties of lithium are further improved.

Embodiments have been described in more detail with reference to the accompanying drawings, but the present disclosure is not limited to these embodiments. It is obvious that a person with ordinary knowledge in the technical field, to which this present disclosure belongs, can derive one or more suitable examples of changes or modifications within the scope of the technical idea described in the claims, and these are within the technical scope of this present disclosure.

### List of Reference Numerals for Major Elements

1 lithium battery 2, 20 anode
3, 10 cathode 4 separator
5 battery case 6 cap assembly
7 battery structure 8 electrode tab
11 cathode current collector 12 cathode active material layer
21 anode current collector 22 electrodeposition inducing layer
23 lithium electrodeposition layer 30 solid electrolyte layer

## Claims

1. An anode comprising:
an anode current collector; and
an electrode position inducing layer on the anode current collector, the electrodeposition inducing layer comprising a first carbonaceous material, wherein the first carbonaceous material is amorphous carbon comprising a nitrogen element, and
an amount of the nitrogen element is more than about 1 wt% with respect to the total weight of the electrodeposition inducing layer.

2. The anode as claimed in claim 1, wherein
an amount of the nitrogen element is about 1.1 wt% to about 10 wt% with respect to the total weight of the electrodeposition inducing layer.

3. The anode as claimed in claim 1, wherein
the first carbonaceous material is a carbide of a polymer comprising the nitrogen element.

4. The anode as claimed in claim 3, wherein
the polymer comprising the nitrogen element comprises carbonized sulfurized polyacrylonitrile (c-SPAN).

5. The anode as claimed in claim 1, wherein
the first carbonaceous material is amorphous carbon further comprising a sulfur element.

6. The anode as claimed in claim 5, wherein
an amount of the sulfur element among the first carbonaceous material is about 0.1 wt% to about 50 wt%.

7. The anode as claimed in claim 5, wherein
the electrodeposition inducing layer further comprises Li₂S.

8. The anode as claimed in claim 1, wherein
an intensity ratio (Id/Ig) of D peak to G peak of the first carbonaceous material, the intensity ratio (Id/Ig) being obtained from Raman analysis spectrum, is about 0.8 to about 1.5.

9. The anode as claimed in claim 1, wherein
the first carbonaceous material is in a form of particles, and the particles have an average particle diameter of about 100 nm to about 10 µm.

10. The anode as claimed in claim 1,
the electrodeposition inducing layer further comprises a second carbonaceous material, and the second carbonaceous material is a carbonaceous conductive material.

11. The anode as claimed in claim 10, wherein
the second carbonaceous material comprises carbon black, denka black, Ketjen black, a carbon nanotube, a carbon nanofiber, a carbon nanobelt, fullerene, activated carbon, a carbon fiber, or a combination thereof.

12. The anode as claimed in claim 10, wherein a ratio of the first carbonaceous material to the second carbonaceous material, in the electrodeposition inducing layer, is about 1:99 to about 99:1.

13. The anode as claimed in claim 1, wherein
the electrodeposition inducing layer further comprises a binder.

14. The anode as claimed in claim 13, wherein
the binder comprises a fluorine-based binder or an acryl-based binder.

15. The anode as claimed in claim 13, wherein
the electrodeposition inducing layer comprises the binder in an amount of about 1 part by weight to about 30 parts by weight with respect to 100 parts by weight of the first carbonaceous material.

16. The anode as claimed in claim 1, wherein
the electrode position inducing layer has a thickness of about 1 µm to about 50 µm.

17. The anode as claimed in claim 1, further comprising
a lithium electrodeposition layer on the electrodeposition inducing layer.

18. The anode as claimed in claim 17, wherein
the lithium electrodeposition layer has a thickness of about 50 µm or less.

19. A lithium battery comprising:
a cathode;
the anode according to claim 1; and
an electrolyte between the cathode and the anode.

20. The lithium battery as claimed in claim 19, wherein
the electrolyte is a liquid electrolyte, a gel electrolyte, a solid electrolyte, or a combination thereof.
